(19) Europäisches Patentamt
European Patent Office
Office européen des brevets

(11) **EP 1 393 486 B1**

(12) **EUROPEAN PATENT SPECIFICATION**

(45) Date of publication and mention
of the grant of the patent:
**09.07.2008 Bulletin 2008/28**

(21) Application number: **02739494.9**

(22) Date of filing: **28.05.2002**

(51) Int Cl.:
**H04L 1/06** (2006.01)

(86) International application number:
**PCT/US2002/016897**

(87) International publication number:
**WO 2002/098051 (05.12.2002 Gazette 2002/49)**

(54) **SPACE-TIME CODED TRANSMISSIONS WITHIN A WIRELESS COMMUNICATION NETWORK**

DRAHTLOSES KOMMUNIKATIONSNETZWERK BASIEREND AUF RAUMZEITKODIERUNG

TRANSMISSIONS CODEES SPATIO-TEMPORELLES DANS UN RESEAU DE COMMUNICATION SANS FIL

(84) Designated Contracting States:
**DE FI FR GB IT SE**

(30) Priority: **25.05.2001 US 293476 P**

(43) Date of publication of application:
**03.03.2004 Bulletin 2004/10**

(73) Proprietor: **REGENTS OF THE UNIVERSITY OF MINNESOTA**
**Minneapolis, MN 55455 (US)**

(72) Inventors:
• **GIANNAKIS, Georgios B.**
**Minnetonka, MN 55305 (US)**
• **ZHOU, Shengli**
**Ashford, CT 06278 (US)**

(74) Representative: **Grünecker, Kinkeldey,**
**Stockmair & Schwanhäusser**
**Anwaltssozietät**
**Leopoldstrasse 4**
**80802 München (DE)**

(56) References cited:
• **LIU Z ET AL: "Space-time coding for broadband wireless communications" WIRELESS COMMUNICATIONS AND MOBILE COMPUTING, JAN.-MARCH 2001, WILEY, UK, vol. 1, no. 1, pages 35-53, XP002210873 ISSN: 1530-8669**
• **ZHENGDAO WANG ET AL: "Linearly precoded or coded OFDM against wireless channel fades?" 2001 IEEE THIRD WORKSHOP ON SIGNAL PROCESSING ADVANCES IN WIRELESS COMMUNICATIONS (SPAWC'01). WORKSHOP PROCEEDINGS (CAT. NO.01EX471), PROCEEDINGS OF SPAWC-20001. THIRD IEEE SIGNAL PROCESSING WORKSHOP ON SIGNAL PROCESSING ADVANCES IN WIRELESS COMMUNIC, pages 267-270, XP002210874 2001, Piscataway, NJ, USA, IEEE, USA ISBN: 0-7803-6720-0**

**Description**

The invention relates to communication systems and, more particularly, multiple-antennae transmitters and receivers for use in wireless communication systems.

Space-time (ST) coding using multiple transmit-antennae has been recognized as an attractive means of achieving high data rate transmissions with diversity and coding gains in wireless applications. However, ST codes are typically designed for frequency flat channels. Future broadband wireless systems will likely communicate symbols with duration smaller than the channel delay spread, which gives rise to frequency selective propagation effects. When targeting broadband wireless applications, it is important to design ST codes in the presence of frequency selective multipath channels. Unlike flat fading channels, optimal design of ST codes for dispersive multipath channels is complex because signals from different antennas are mixed not only in space, but also in time. In order to maintain decoding simplicity and take advantage of existing ST coding designs for flat fading channels, most conventional techniques have pursued two-step approaches. In particular, the techniques mitigate intersymbol interference (ISI) by converting frequency selective fading channels to flat fading channels, and then design ST coders and decoders for the resulting flat fading channels. One approach to ISI mitigation has been to employ a relatively complex multiple-input multiple-output equalizer (MIMO-EQ) at the receiver to turn FIR channels into temporal ISI-free ones.

Another approach, with lower receiver complexity, is to employ orthogonal frequency division multiplexing (OFDM), which converts frequency selective multipath channels into a set of flat fading subchannels through inverse Fast Fourier Transform (FFT) and cyclic prefix (CP) insertion at the transmitter, together with CP removal and FFT processing at the receiver. On the flat fading OFDM subchannels, many techniques have applied ST coding for transmissions over frequency-selective channels. Some of these assume channel knowledge, while others require no channel knowledge at the transmitter.

Although using ST codes designed for flat fading channels can at least achieve full multi-antenna diversity, the potential diversity gains embedded in multipath propagation have not been addressed thoroughly. OFDM based systems are able to achieve both multi-antenna and multipath diversity gains of order equal to the product of the number of transmit-antennas, the number of receive-antennas, and the number of FIR channel taps. However, code designs that guarantee full exploitation of the embedded diversity have not been explored. A simple design achieves full diversity, but it is essentially a repeated transmission, which decreases the transmission rate considerably. On the other hand, for single antenna transmissions, it has been shown that a diversity order equal to the number of FIR taps is achievable when OFDM transmissions are linearly precoded across subcarriers. An inherent limitation of multicarrier (OFDM) based ST transmissions is a non-constant modulus, which necessitates power amplifier back-off, and thus reduces power efficiency. In addition, multi-carrier schemes are more sensitive to carrier frequency offsets relative to their single-carrier counterparts.

One space-time coding technique is described by Z. Liu and G.B. Giannakis "Space-time coding for broadband wireless communication", Wireless Sysetms and Mobile Computing, vol. 1, no.1 pp 33-53, Jan. - March 2001. Other transmission techniques are described by Lindskog et al. "A transmit diversity scheme for channels with intersymbol interference," Proceedings of ICC, June 2000, vol. 1, pp 307-311, and F.W. Vook et al. "Transmit diversity schemes for broadband mobile communication systems," Processions on IEEE Vehicular Technology Conference, vol. 6, pp. 2523-2529, 2000. These techniques fail to achieve full diversity in rich scattering environments.

The object of the present invention is to provide an improved method and apparatus for space-time block coding techniques for a single carrier block transmission in the presence of frequency and selective fading channels.

This object is solved by the present invention and in particular by the subject matter of the independent claims.

Preferred embodiments are defined by the subject matter of the dependent claims.

In general, the invention is directed to space-time block coding techniques for single carrier block transmissions in the presence of frequency-selective fading channels. Furthermore, in accordance with the techniques, a maximum diversity up to order $N_t N_r (L + 1)$ can be achieved in a rich scattering environment, where $N_t$ is the number of transmit antennas, $N_r$ is the number of receive antennas, and $(L + 1)$ is the number of taps corresponding to each FIR channel. The techniques enable simple linear processing to collect full antenna diversity, and incur receiver complexity that is comparable to single antenna transmissions. Notably, the transmissions enable exact application of Viterbi's algorithm for maximum-likelihood (ML) optimal decoding, in addition to various reduced-complexity suboptimal equalization alternatives. When the transmissions are combined with channel coding, they facilitate application of iterative (turbo) equalizers. Simulation results demonstrate that joint exploitation of space-multipath diversity leads to significantly improved performance in the presence of frequency selective multipath channels.

In one embodiment, a method may comprise applying a permutation matrix to blocks of symbols of an outbound data stream, and generating transmission signals from the permutated blocks of symbols. The method may further comprise communicating the transmission signals through a wireless communication medium.

In another embodiment, a method may comprise parsing a stream of information-bearing symbols to form blocks of K symbols, precoding the symbols to form blocks having J symbols, and collecting consecutive $N_s$ blocks. The

method may further comprise applying a permutation matrix to the $N_s$ blocks, generating a space-time block coded matrix having $N_t$ rows, each row containing $N_d*J$ symbols, generating $N_t$ transmission signals from the symbols of the $N_t$ rows, and communicating the $N_t$ transmission signals through a wireless communication medium.

In another embodiment, a transmitting device may comprise an encoder to apply a permutation matrix to blocks of information bearing symbols and to generate a space-time block coded matrix of the permutated blocks of symbols. The transmitting device further comprises a plurality of pulse shaping units to generate a plurality of transmission signals from the symbols of the space-time block coded matrix, and a plurality of antennae to communicate the transmission signals through a wireless communication medium.

The details of one or more embodiments of the invention are set forth in the accompanying drawings and the description below. Other features, objects, and advantages of the invention will be apparent from the description and drawings, and from the claims.

FIG. 1 is a block diagram illustrating a wireless communication system in which a transmitter communicates with a receiver through a wireless channel using space-time coded transmissions.

FIGS. 2 - 3 are timing diagrams illustrating the transmitted sequences from the antennas of the transmitter of FIG. 1.

FIG. 4 is another example transmission format for the transmitter of FIG. 1.

FIG. 5 is an example communication system using channel coding with the space-time coded transmission techniques in accordance with the principles of the invention.

FIGS. 6 - 9 are graphs illustrating simulated performance results for systems with two transmit and one receive antenna.

The Detailed Description is organized as follows: Section I deals with the special case in which a system includes of a receiver having a single antenna, and transmitter having two transmit antennas. Section II details the equalization and decoding designs. Section III generalizes the proposed schemes to multiple transmit- and receive-antennas. Simulation results are presented in Section IV.

Throughout the Detailed Description, bold upper letters denote matrices, bold lower letters stand for column vectors; $(\cdot)^*$, $(\cdot)^T$ and $(\cdot)^H$ denote conjugate, transpose, and Hermitian transpose, respectively; $E\{\cdot\}$ for expectation, $\mathrm{tr}\{\cdot\}$ for the trace of a matrix, $\|\cdot\|$ for the Euclidean norm of a vector, $I_K$ denotes the identity matrix of size K, $0_{M\times N}$ ($1_{M\times N}$) denotes an all-zero (all-one) matrix with size MxN, and $F_N$ denotes an NXN FFT matrix with the (p+1; q+1)st entry of:

$$(1/\sqrt{N})\exp(-j2\pi pq/N),\ \forall p,q \in [0, N-1]_;$$

diag(x) stands for a diagonal matrix with x on its diagonal. $[\cdot]_p$ denotes the (p+1)st entry of a vector, and $[\cdot]_{p,q}$ denotes the (p+1; q+1)st entry of a matrix.

I. SINGLE CARRIER BLOCK TRANSMISSIONS

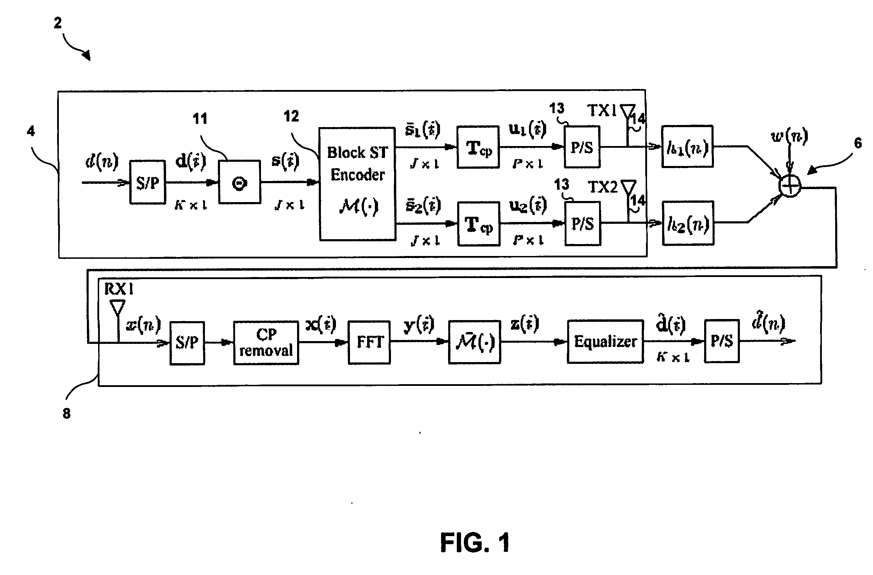

FIG. 1 is a block diagram illustrating a wireless communication system 2 in which a transmitter 4 communicates with a receiver 6 through a wireless communication channel 8. In particular, FIG 1 illustrates the discrete-time equivalent baseband model in which transmitter 4 transmits a data with two transmit antennas ($N_t$ = 2), and receiver 6 receives data with a single receive antenna ($N_r$ = 1). Transmitter 4 includes a precoder 11, an encoder 12, two pulse shaping units 13 for generating transmission signals, and two transmission antennae 14.

The information-bearing data symbols d(n) belonging to an alphabet A are first parsed to K x 1 blocks d(i) := $[d(iK); ... ; d(iK + K-1)]^T$, where the serial index n is related to the block index i by: n = iK + k; k $\in$ [0;K - 1]. The blocks d(i) are precoded by a J x K matrix $\Theta$ (with entries in the complex field) to yield J x 1 symbol blocks: s(i) := $\Theta$d(i). The linear precoding by $\Theta$ can be either non-redundant with J = K, or, redundant when J > K. The ST encoder takes as input two consecutive blocks s(2i) and s(2i + 1) to output the following 2J x 2 space-time block coded matrix:

$$\begin{bmatrix} \bar{s}_1(2i) & \bar{s}_1(2i+1) \\ \bar{s}_2(2i) & \bar{s}_2(2i+1) \end{bmatrix} := \begin{bmatrix} s(2i) & -Ps^*(2i+1) \\ s(2i+1) & Ps^*(2i) \end{bmatrix} \begin{matrix} \rightarrow \text{time} \\ \downarrow \text{space} \end{matrix},\ (1)$$

where P is a permutation matrix that is drawn from a set of permutation matrices $\left\{P_J^{(n)}\right\}_{n=0}^{J-1}$, with J denoting the dimensionality J x J. Each performs a reverse cyclic shift (that depends on n) when applied to a J x 1 vector a := [a(0); a(1); ... ; a(J -1)]$^T$. Specifically, $[P_J^{(n)} \mathbf{a}]_p = a((J-p+n) \bmod J)$. Two special cases are $P_J^{(0)}$ and $P_J^{(1)}$. The output of $P_J^{(0)} \mathbf{a} = [a(J - 1); a(J - 2); \ldots; a(0)]^T$ performs *time-reversal* of a, while

$P_J^{(1)} \mathbf{a} = [a(0); a(J - 1); a(J - 2); \ldots ; a(1)]^T = F_J^{(-1)} F_J^{(H)} = F_J^{(H)} F_J^{(H)} \mathbf{a}$ corresponds to taking the J-point IFFT twice on the vector a. This double IFFT operation in the ST coded matrix is in fact a special case of a Z-transform approach originally proposed in Z. Liu and G. B. Giannakis, "Space-time coding with transmit antennas for multiple access regardless of frequency-selective multi-path," in Proc. of Sensor Array and Multichannel Signal Processing Workshop, Boston, MA, Mar. 2000, pp. 178-182., with the Z-domain points chosen to be equally spaced on the unit circle: $\left\{e^{j\frac{2\pi}{J}n}\right\}_{n=0}^{J-1}$. The techniques herein allow for any P from the set $\left\{P_J^{(n)}\right\}_{n=0}^{J-1}$.

At each block transmission time interval i, the blocks $s_1(i)$ and $s_2(i)$ are forwarded to the first and the second antennae of transmitter 4, respectively. From equation (1), we have:

$$\bar{\mathbf{s}}_1(2i + 1) = -P\bar{\mathbf{s}}_2^*(2i), \qquad \bar{\mathbf{s}}_2(2i + 1) = P\bar{\mathbf{s}}_1^*(2i), \quad (2)$$

which shows that each transmitted block from one antenna at time slot 2i+1 is a conjugated and permuted version of the corresponding transmitted block from the other antenna at time slot 2i (with a possible sign change). For flat fading channels, symbol blocking is unnecessary, i.e., J = K = 1 and P = 1, and the design of (1) reduces to the Alamouti ST code matrix. However, for frequency selective multipath channels, the permutation matrix P is necessary as will be clarified soon.

To avoid inter-block interference in the presence of frequency selective multipath channels, transmitter 4 insert a cyclic prefix for each block before transmission. Mathematically, at each antenna $\mu \in$ [1,2], a tall P X J transmitmatrix

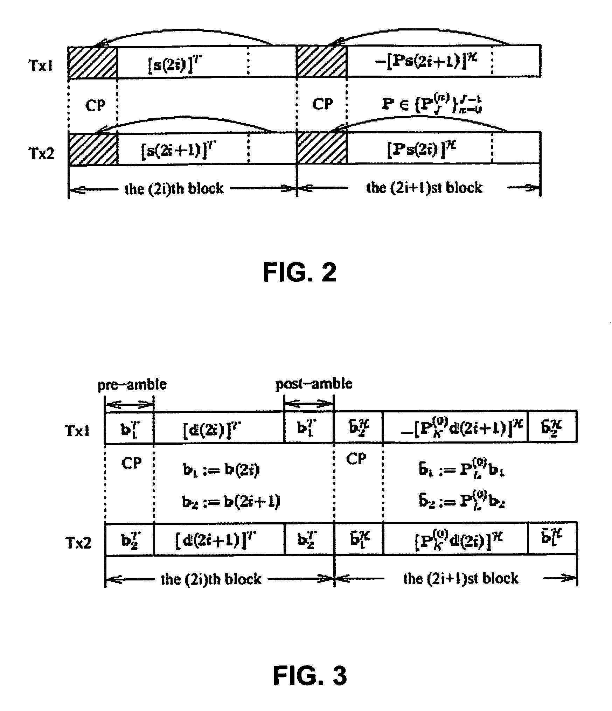

$\mathbf{T}_{cp} := [\mathbf{I}_{cp}^T, \mathbf{I}_J^T]^T$, with $I_{cp}$ comprising the last P -J rows of $I_J$, is applied on $\bar{\mathbf{s}}_\mu(i)$ to obtain P x 1 blocks: $u_\mu(i) = T_{cp}\bar{\mathbf{s}}_\mu(i)$ Indeed, multiplying $T_{cp}$ with $\bar{\mathbf{s}}_\mu$ (i) replicates the last P - L entries of $\bar{\mathbf{s}}_u$ (i) and places them on its top. The transmitted sequences from both antennas of transmitter 4 are depicted in FIG. 2.

With symbol rate sampling, $h_\mu := [h_\mu (0); \ldots ; h_\mu (L)]^T$ be the equivalent discrete-time channel impulse response (that includes transmit-receive filters as well as multipath effects) between the $\mu$th transmit antenna and the single receive antenna, where L is the channel order. With the CP length at least as long as the channel order, P - J = L, the inter block interference (IBI) can be avoided at the receiver by discarding the received samples corresponding to the cyclic prefix. CP insertion at the transmitter together with CP removal at the receiver yields the following channel input-output relationship in matrix-vector form: x(i)

$$\mathbf{x}(i) = \sum_{\mu=1}^{2} \tilde{\mathbf{H}}_\mu \bar{\mathbf{s}}_\mu(i) + \mathbf{w}(i), \qquad (3)$$

where the channel matrix $\tilde{H}_\mu$ is circulant with
$[\tilde{H}_\mu]_{Pl,} = h_\mu((P- q) \bmod J)$, and the additive Gaussian noise w(i) is assumed to be white with each entry having variance

$$\sigma_w^2 = N_0.$$

Receiver 6 can exploit the following two properties of circulant matrices:

**p1)** Circulant matrices can be diagonalized by FFT operations

$$\tilde{H}_\mu = F_J^{\mathcal{H}} D(\tilde{h}_\mu) F_J \quad \text{and} \quad \tilde{H}_\mu^{\mathcal{H}} = F_J^{\mathcal{H}} D(\tilde{h}_\mu^*) F_J, \tag{4}$$

where

$$D(\tilde{h}_\mu) := \operatorname{diag}(\tilde{h}_\mu), \text{ and } \tilde{h}_\mu := [H_\mu(e^{j0}), H_\mu(e^{j\frac{2\pi}{J}}), \ldots, H_\mu(e^{j\frac{2\pi}{J}(J-1)})]^T$$

with the *p*th entry being the channel frequency response $H_\mu(z) := \sum_{l=0}^{L} h_\mu(l) z^{-l}$ evaluated

at the frequency

$$z = e^{j\frac{2\pi}{J}(p-1)}.$$

p2) Pre- and post- multiplying $\tilde{H}_\mu$ by **P** yields $\tilde{\mathbf{H}}_\mu^T$:

$$P\tilde{H}_\mu P = \tilde{H}_\mu^T \quad \text{and} \quad P\tilde{H}_\mu^* P = \tilde{H}_\mu^{\mathcal{H}}. \tag{5}$$

With the ST coded blocks satisfying (2), let us consider two consecutive received blocks [c.f. (3)]:

$$x(2i) = H_1 \bar{s}_1(2i) + H_2 \bar{s}_2(2i) + w(2i), \tag{6}$$

$$x(2i+1) = -\tilde{H}_1 P \bar{s}_2^*(2i) + \tilde{H}_2 P \bar{s}_1^*(2i) + w(2i+1). \tag{7}$$

Left-multiplying (7) by **P**, conjugating, and using p2), we arrive at:

$$Px^*(2i+1) = -\tilde{H}_1^{\mathcal{H}} \bar{s}_2(2i) + \tilde{H}_2^{\mathcal{H}} \bar{s}_1(2i) + Pw^*(2i+1). \tag{8}$$

Notice that having permutation matrix P inserted at the transmitter allows the Hermitian of the channel matrices in (8) for enabling multi-antenna diversity gains with linear receiver processing.

We will pursue frequency-domain processing of the received blocks, which we describe by multiplying the blocks x(i) with the FFT matrix $F_J$ that implements the J-point FFT of the entries in x(i). Let us define y(2i) := $F_J$x(2i), y*(2i+1) := $F_J$Px*(2i+1), and likewise $\bar{\eta}$(2i) := $F_J$w(2i) and $\bar{\eta}$*(2i+1) := $F_J$P$_w$*(2i + 1). For notational convenience, we also define the diagonal matrices $D_1$ := D($h_1$) and $D_2$ := D($h_2$) with the corresponding transfer function FFT samples on their diagonals. Applying the property p1) on (6) and (8), we obtain the FFT processed blocks as:

$$y(2i) = \mathcal{D}_1 F_J \bar{s}_1(2i) + \mathcal{D}_2 F_J \bar{s}_2(2i) + \bar{\eta}(2i), \tag{9}$$

$$y^*(2i+1) = -\mathcal{D}_1^* F_J \bar{s}_2(2i) + \mathcal{D}_2^* F_J \bar{s}_1(2i) + \bar{\eta}^*(2i+1). \qquad (10)$$

It is important to remark at this point that permutation, conjugation, and FFT operations on the received blocks x(i) do not introduce any information loss, or color the additive noises in (9) and (10) that remain white. It is thus sufficient to rely only on the FFT processed blocks y(2$i$) and y*(2i+1) when performing symbol detection.

After defining y($i$) := [y$^T$(2$i$), y$^H$(2$i$+1)]$^T$, we can combine (9) and (10) into a single block matrix-vector form to obtain:

$$\check{y}(i) = \underbrace{\begin{bmatrix} \mathcal{D}_1 & \mathcal{D}_2 \\ \mathcal{D}_2^* & -\mathcal{D}_1^* \end{bmatrix}}_{:=\mathcal{D}} \begin{bmatrix} F_J s(2i) \\ F_J s(2i+1) \end{bmatrix} + \begin{bmatrix} \bar{\eta}(2i) \\ \bar{\eta}^*(2i+1) \end{bmatrix}, \qquad (11)$$

where the identities $\bar{s}_1(2i)$ = s(2$i$) and $\bar{s}_2(2i)$ = s(2$i$ + 1) have been used following our design in (1).

Consider a $J \times J$ diagonal matrix $\overline{D}_{12}$ with non-negative diagonal entries as: $\bar{\mathcal{D}}_{12} = [\mathcal{D}_1^* \mathcal{D}_1 + \mathcal{D}_2^* \mathcal{D}_2]^{1/2}$.

We can verify that the matrix $D$ in (11) satisfies $\mathcal{D}^{\mathcal{H}} \mathcal{D} = I_2 \otimes \bar{\mathcal{D}}_{12}^2$, where $\otimes$ stands for Kronecker product. Based on $D_1$ and $D_2$, we next construct a unitary matrix U. If h$_1$ and h$_2$ do not share common zeros on the FFT grid $\{e^{j\frac{2\pi}{J}n}\}_{n=0}^{J-1}$, then $\overline{D}_{12}$ is invertible, and we select U as U := $\mathcal{D}(I_2 \otimes \bar{\mathcal{D}}_{12}^{-1})$. If h$_1$ and h$_2$ happen to share common zero(s) on the FFT grid (although this event has probability zero), then we construct U as follows. Supposing without of loss of generality that h$_i$ and h$_2$ share a common zero at the first subcarrier $e^{j0}$, we have that $[D_1]_{1,1} = [D_2]_{1,1} = [\overline{D}_{12}]_{1,1} = 0$. We then construct a diagonal matrix $D'_1$ which differs from $D_1$ only at the first diagonal entry: $[D'_1]_{1,1} = 1$. Similar to the definition of $D$ and $\overline{D}_{12}$, we construct $D'$ and $\bar{\mathcal{D}}_{12}'$ by substituting $D_1$ with $\mathcal{D}'_1$. Because $\bar{\mathcal{D}}_{12}'$ is invertible, we form $U := \mathcal{D}'[I_2 \otimes (\bar{D}_{12}')^{-1}]$. In summary, no matter whether $\overline{D}_{12}$ is invertible or not, we can always construct a unitary U, which satisfies U$^H$U = I$_{2J}$ and U$^H$D = I$_2 \otimes \overline{D}_{12}$, where the latter can be easily verified. As multiplying by unitary matrices does not incur any loss of decoding optimality in the presence of additive white Gaussian noise, (11) yields $\overline{Z}$(i) := [Z$^T$(2$i$), z$^T$(2i +1)]$^T$ as:

$$\check{z}(i) = U^{\mathcal{H}} \check{y}(i) = \begin{bmatrix} \bar{\mathcal{D}}_{12} F_J s(2i) \\ \bar{\mathcal{D}}_{12} F_J s(2i+1) \end{bmatrix} + U^{\mathcal{H}} \begin{bmatrix} \bar{\eta}(2i) \\ \bar{\eta}^*(2i+1) \end{bmatrix}, \qquad (12)$$

where the resulting noise η($i$) := [η$^T$(2$i$), η$^T$(2$i$ + 1)]$^T$ = U$^H$[$\overline{\eta}^T$(2$i$), $\overline{\eta}^H$(2$i$ + 1)]$^T$ is still white with each entry having variance $N_0$.

We infer from (12) that the blocks s(2i) and s(2$i$+1) can be demodulated separately without comprising the ML optimality, after linear receiver processing. Indeed, so far we applied at the receiver three linear unitary operations after the CP removal: i) permutation (via P); ii) conjugation and FFT (via F$_J$); and iii) unitary combining (via U$^H$). As a result, we only need to demodulate each information block d(i) separately from the following sub-blocks [c.f. (12)]:

$$z(i) = \overline{D}_{12} F_J s(i) + \eta(i) = \overline{D}_{12} F_J \Theta d(i) + \eta(i). \qquad (13)$$

*A. Diversity gain analysis*

Let us drop the block index i from (13), and e.g., use dto denote d(i)for notational brevity. With perfect CSI at the receiver, we will consider the pairwise error probability (*PEP*)*P*(d → d'|h$_1$,h$_2$) that the symbol block *d* is transmitted, but is erroneously decoded as *d'≠d.* The *PEP* can be approximated using the Chernoff bound as

$$P\left(s \rightarrow s' | h_1 h_2\right) \le \exp\left(-d^2(z, z') / 4N_0\right),$$

$$(14)$$

where $d(z, z')$ denotes the Euclidean distance between $z$ and $z'$.

Define the error vector as $e := d-d'$ and a $J \times (L+1)$ Vandermonde matrix V with $[V]_{p,q} = \exp(-j2\pi pq/J)$. The matrix V links the channel frequency response with the time-domain channel taps as $\tilde{h}_\mu = V h_\mu$. Starting with (13), we then express the distance as:

$$d^2(z, z') = \left\| \overline{D}_{12} F_J \theta e \right\|^2 = e^H \theta^H F_J^H \overline{D}_{12}^2 F_J \theta e$$

$$= \sum_{\mu=1}^2 \left\| D_\mu F_J \theta e \right\|^2 = \sum_{\mu=1}^2 \left\| D_e V h_\mu \right\|^2,$$

$$(15)$$

where $D_e := diag(F_J \theta e)$ such that $D_\mu F_J \theta e = D_e \tilde{h}_\mu = D_e V h_\mu$.

We focus on block quasi static channels, i.e., channels that remain invariant over each space-time coded block, but may vary from one block to the next. We further adopt the following assumption: as0)the channels $h_1$ and $h_2$ are uncorrelated; and for each antenna $\mu \varepsilon [1,2]$, the channel $h_\mu$ is zero-mean, complex Gaussian distributed, with covariance matrix $R_{h,\mu} := \mathrm{E}\left\{ h_\mu h_\mu^H \right\}$.

If the entries of $h_\mu$ are i.i.d., then we have $R_{h,\mu} = I_{L+1} / (L+1)$, where the channel covariance matrix is normalized to have unit energy; i.e., $tr\{R_{h,\mu}\}=1$, Because general frequency selective multipath channels have covariance matrices with arbitrary rank, we define the "effective channel order" as: $\tilde{L}_\mu = rank(R_{h,\mu})-1$. Consider now the following eigen decomposition:

$$R_{h,\mu} = U_{h,\mu} \Lambda_{h,\mu} U_{h,\mu}^H,$$

$$(16)$$

where $\Lambda_{h,\mu}$ is an $(\tilde{L}_\mu + 1) \times (\tilde{L}_\mu + 1)$ diagonal matrix with the positive eigenvalues of $R_{h,\mu}$ on its diagonal, and $U_{h,\mu}$ is an $(L+1) \times (\tilde{L}_\mu+1)$ matrix having orthonormal columns: $U_{h,\mu}^H U_{h,\mu} = I_{\tilde{L}_\mu+1}$. Defining $\overline{h}_\mu = \Lambda_{h,\mu}^{-\frac{1}{2}} U_{h,\mu}^H h_\mu$, we can verify that the entries of $\overline{h}_\mu$ are i.i.d. with unit variance. Since $h_\mu$ and $\mathbf{U}_{h,\mu} \Lambda_{h,\mu}^{\frac{1}{2}} \overline{\mathbf{h}}_\mu$ have identical distributions, we replace the former by the latter in the ensuing PEP analysis. A special case of interest corresponds to transmissions experiencing channels with full rank correlation matrices; i.e., rank($R_{h,u}$) = $L + 1$ and $\tilde{L}_\mu = L$. As will be clear later on, a rich scattering environment leads to $R_{h,\mu}$'s with full rank, which is favorable in broadband wireless applications because it is also rich in diversity.

With the aid of the whitened and normalized channel vector $\overline{h}_\mu$, we can simplify (15) to:

$$d^2(\mathbf{z}, \mathbf{z}') = \left\| \mathbf{D}_e \mathbf{V} \mathbf{U}_{h,1} \Lambda_{h,1}^{\frac{1}{2}} \overline{\mathbf{h}}_1 \right\|^2 + \left\| \mathbf{D}_e \mathbf{V} \mathbf{U}_{h,2} \Lambda_{h,2}^{\frac{1}{2}} \overline{\mathbf{h}}_2 \right\|^2. \qquad (17)$$

From the spectral decomposition of the matrix $\mathbf{A}_{c,\mu}^{\mathcal{H}} \mathbf{A}_{c,\mu}$, where $\mathbf{A}_{c,\mu} := \mathbf{D}_e \mathbf{V} \mathbf{U}_{h,\mu} \Lambda_{h,\mu}^{\frac{1}{2}}$, we know that there exists a unitary matrix $U_{e,\mu}$ such that $\mathbf{U}_{c,\mu}^{\mathcal{H}} \mathbf{A}_{c,\mu}^{\mathcal{H}} \mathbf{A}_{c,\mu} \mathbf{U}_{c,\mu} = \Lambda_{c,\mu}$, where $\Lambda_{e,\mu}$ is diagonal with non-increasing diagonal entries collected in the vector $\lambda_{e,\mu} := [\lambda_{e,\mu}(0), \lambda_{e,\mu}(1), ..., \lambda_{e,\mu}(\tilde{L}_\mu)]^T$.

Consider now the channel vectors $\overline{\mathbf{h}}'_\mu := \mathbf{U}_{c,\mu}^{\mathcal{H}} \overline{\mathbf{h}}_\mu$, with identity correlation matrix. The vector $\overline{\mathbf{h}}'_\mu$ is clearly

zero-mean, complex Gaussian, with i.i.d entries. Using $\bar{\mathbf{h}}'_\mu$, we can rewrite (17) as:

$$d^2(z,z') = \sum_{\mu=1}^{2} (\bar{\mathbf{h}}'_\mu)^{\mathcal{H}} \mathbf{U}^{\mathcal{H}}_{c,\mu} \mathbf{A}^{\mathcal{H}}_{c,\mu} \mathbf{A}_{c,\mu} \mathbf{U}_{c,\mu} \bar{\mathbf{h}}'_\mu = \sum_{l=1}^{\bar{L}_1} \lambda_{c,1}(l)|\bar{h}'_1(l)|^2 + \sum_{l=1}^{\bar{L}_2} \lambda_{c,2}(l)|\bar{h}'_2(l)|^2. \qquad (18)$$

Based on (18), and by averaging (14) with respect to the i.i.d. Rayleigh random variables $|\bar{h}'_1(l)|, |\bar{h}'_2(l)|,$ we can upper bound the average PEP as follows:

$$P(s \to s') \le \prod_{l=0}^{\bar{L}_1} \frac{1}{1 + \lambda_{c,1}(l)/(4N_0)} \prod_{l=0}^{\bar{L}_2} \frac{1}{1 + \lambda_{c,2}(l)/(4N_0)}. \qquad (19)$$

If $T_{e,\mu}$ is the rank of $A_{e,\mu}$ (and thus the rank of $\mathbf{A}^{\mathcal{H}}_{c,\mu}\mathbf{A}_{c,\mu}$), then $\lambda_{e,\mu}(l) \ne 0$ if and only if $l \in (0, r_{e,\mu}-1]$. It thus follows from (19) that

$$P(s \to s') \le \left(\frac{1}{4N_0}\right)^{-(r_{e,1}+r_{e,2})} \left(\prod_{l=0}^{r_{e,1}-1} \lambda_{c,1}(l) \prod_{l=0}^{r_{e,2}-1} \lambda_{c,2}(l)\right)^{-1}. \qquad (20)$$

We call $r_e := r_{e,1} + r_{e,2}$ the diversity gain $G_{d,c}$, and $\left[\prod_{l=0}^{r_{c,1}-1} \lambda_{c,1}(l) \prod_{l=0}^{r_{c,2}-1} \lambda_{c,2}(l)\right]^{1/r_e}$ the coding gain $G_{c,e}$ of the system for a given symbol error vector e. The diversity gain $G_{d,c}$ determines the slope of the averaged (w.r.t. the random channel) PEP (between s and s') as a function of the signal to noise ratio (SNR) at high SNR ($N_0 \to 0$). Correspondingly, $G_{c,e}$ determines the shift of this PEP curve in SNR relative to a benchmark error rate curve of $(1/(4N_0))^{-re}$. Without relying on PEP to design (nonlinear) ST codes for flat fading channels, we here invoke PEP bounds to prove diversity properties of our proposed single-carrier block transmissions over frequency selective channels.
Since both $G_{d,c}$ and $G_{c,c}$ depend on the choice of e (thus on s end s'), we define the diversity and coding gains for our system, respectively, as:

$$G_d := \min_{0 \ne 0} G_{d,c}, \quad \text{and} \quad G_c := \min_{0 \ne 0} G_{c,c}. \qquad (21)$$

Based on (21), one can check both diversity and coding gains. However, in this paper, we focus only on the diversity gain. First, we observe that the matrix $\mathbf{A}^{\mathcal{H}}_{c,\mu}\mathbf{A}_{c,\mu}$ is square of size $(\tilde{L}_\mu + 1)$. Therefore, the maximum achievable diversity gain in a two transmit- and one receive-antennae system is $C_a = \sum_{\mu=1}^{2}(\tilde{L}_\mu + 1)$ for FLR channels with effective channel order $\tilde{L}_\mu, \mu = 1, 2$, while it becomes 2(L + 1) in rich scattering environments. This maximum diversity can be easily achieved by e.g., a simple redundant transmission where each antenna transmits the same symbol followed by L zeros in two non-overlapping time slots. We next examine the achieved diversity levels in our following proposed schemes, which certainly have much higher rate than redundant transmissions.

*B. CP-only*

We term CP-only the block transmissions with no preceding: $\Theta = I_k$, J = K, and s(i) = d(i). The word "only" emphasizes that, unlike OFDM, no IFFT is applied at the transmitter. Let us now check the diversity order achieved by CP-only. The worst case is to select d = $a1_{J \times 1}$ and d' = $a'1_{J \times 1}$ implying e = $(a - a')1_{J \times 1}$, where $a, a' \in$ A. Verifying that for these error events, the matrix $D_c = \text{diag}(F_J e)$ has only one non-zero entry, we deduce that $r_{c,1} = T_{c,2} = 1$. Therefore, the system diversity order achieved by CP-only is $G_d = 2$. This is nothing but space-diversity of order two coming from the two transmit antennas [c.f (13)]. Note that CP-only schemes suffer from loss of multipath diversity.

To benefit also from the embedded multipath=induced diversity, we have to modify our transmissions.

*C. Linearly Precoded CP-only*

To increase our ST system's diversity order, transmitter 4 may utilize linear precoding developed originally for single-antenna transmissions. One can view CP-only as a special case of the linearly precoded CP-only system (denoted henceforth as LP-CP-only) with identity precoder. With s(i) = $\Theta$d(i) and carefully designed $\Theta \neq I \kappa$, we next show that the maximum diversity is achieved. We will discuss two cases: the first one introduces no redundancy because it uses J = K, while the second one is redundant and adopts J = K + L. For non-redundant precoding with J = K, it has been established that for *any* signal constellation adhering to a finite alphabet, there always exists a K x K unitary constellation rotating (CR) matrix ensuring $\Theta_{CR}$ that each entry of $\Theta_{CR}$ (d - d') is non-zero *for any* pair of (d,d'). We thus propose to construct $\boldsymbol{\Theta} = \mathbf{F}_K^{\mathcal{H}} \boldsymbol{\Theta}_{cr}$ such that $F_K\Theta = \Theta_{cr}$. With this construction, $D_c$ = diag($\Theta_{cr}$e) is guaranteed to have non-zero entries on its diagonal, and thus it has full rank. Consequently, the matrix $D_e V$ has full column rank $L+1$, and $\mathbf{A}_{c,fs} = \mathbf{D}_c \mathbf{V} \mathbf{U}_{h,fs} \boldsymbol{\Lambda}_{h,fs}^{\frac{1}{2}}$ has full column rank $r_{c,fs} = \overline{L}_\mu + 1$. Hence, the maximum achievable diversity order is indeed achieved.

We emphasize here that the non-redundant precoder $\Theta_{er}$ is constellation dependent. For commonly used BPSK, QPSK, and all QAMs constellations, and for the block size K equal to a power of 2: $K = 2^m$, one class of $\Theta_{er}$ precoders with large coding gains is found to be :

$$\Theta_{cr} = \mathbf{F}_K \boldsymbol{\Delta}(\alpha), \quad \text{and thus,} \quad \Theta = \boldsymbol{\Delta}(\alpha), \tag{22}$$

where $\Delta(\alpha) := \text{diag}(1, \alpha, ..., \alpha^{K-1})$ with $\alpha \in \left\{ e^{j\frac{\pi}{2K}(1+4n)} \right\}_{n=0}^{K-1}$. For block size $K \neq 2^{th}$, one can construct $\Theta_{cr}$ by truncating a larger unitary matrix constructed as in (22). The price paid for our increased diversity gain is that LP-CP-only does not offer constant modulus transmissions, in general. However, by designing *K* to be a power of 2, and by choosing $\Theta$ as in (22), the transmitted signals s(*i*) = $\Delta(\alpha)$d(*i*) are constant modulus if d(i) are PSK signals. Therefore, by selecting *K* to be a power of 2, we can increase the diversity gain without reducing power efficiency.

Alternatively, we can adopt a redundant $J{\times}K$ precoder $\Theta$ with J = *K+L*. Our criterion for selecting such tall precoding matrices $\Theta$ is to guarantee that $F_J\Theta$ satisfies the following property: *any K* rows of $F_J\Theta$ are linearly independent. One class of $F_J\Theta$ satisfying this property includes Vandermonde matrices $\Theta_{van}$ with distinct generators [$\rho_L, ..., \rho_J$], defined as :

$$\Theta_{van} = \frac{1}{\sqrt{J}} \begin{bmatrix} 1 & \rho_1^{-1} & \cdots & \rho_1^{-(K-1)} \\ \vdots & \vdots & \ddots & \vdots \\ 1 & \rho_J^{-1} & \cdots & \rho_J^{-(K-1)} \end{bmatrix}, \quad \text{and thus,} \quad \Theta = \mathbf{F}_J^{\mathcal{H}} \Theta_{van}. \tag{23}$$

With $F_J\Theta = \Theta_{van}$, we have that $\Theta_{van}$e has at least (*L* + 1) nonzero entries for any e regardless of the underlying signal constellation. Indeed, if $\Theta_{van}$e has only L nonzero entries for some e, then it has *K* zero entries. Picking the corresponding *K* rows of $\Theta_{van}$ to form the truncated matrix $\overline{\Theta}_{van}$, we have $\overline{\Theta}_{van}$e = 0, which shows that these *K* rows are linearly dependent, thus violating the design of the precoder $\Theta_{van}$. With $D_c$ = ding($\Theta_{van}$e) having at least (L + 1) nonzero entries, the matrix $D_c$ V has full rank because *any L* + 1 rows of V are linearly independent. Thus, the maximum diversity gain is achieved with redundant precoding *irrespective* of the underlying constellation.

When $J \in [K, K + L]$, constellation irrespective precoders are impossible because $\Theta$e can not have L + 1 nonzero entries for any e that is unconstrained. Therefore, constellation independent precoders are not possible for J < K + L. However, with some redundancy J > K, the design of constellation-dependent precoders may become easier.

*D. Affine Precoded CP-only*

Another interesting class of linear precoders implements an affine transformation: s(i) = $\Theta$d(*i*) + $\Theta$'b(*i*), where

b(i) is a known symbol vector. In this paper, we are only interested in the special form of:

$$s(i) = T_1 d(i) + T_2 b(i) = \begin{bmatrix} d(i) \\ b(i) \end{bmatrix}, \qquad (24)$$

where the precoder $\Theta = T_1$ is the first K columns of $I_J$, the precoder $\Theta' = T_2$ is the last L columns of $I_J$, and the known symbol vector b has size L $\times$ 1 with entries drawn from the same alphabet A We henceforth term the transmission format in (24) as AP-CP-only. Notice that in this scheme, $J = K + L$ and $P=J+L$.

Although here we place b(i) at the bottom of s($i$) for convenience, we could also place b($i$) at arbitrary positions within s($i$). As long as L consecutive symbols are known in s($i$), all decoding schemes detailed in Section II are applicable.

Recall that the error matrix $D_c$ = diag($F_J T_1$e) does not contain known symbols. Since $F_J T_1$ is a Vandermonde matrix of the form (23), the maximum diversity gain is achieved, as discussed in Section I-C for redundant LP-CP-only.

In the CP-based schemes depicted in Fig. 2, the CP portion of the transmitted sequence is generally unknown, because it is replicated from the unknown data blocks. However, with AP-CP-only in (24), and with the specific choice of $P = P_J^{(K)}$, we have $P_J^{(K)} s(i) = [[P_K^{(0)} d(i)]^T, \ [P_L^{(0)} b(i)]^T]^T$, which implies that *both* the data block and the known symbol block are time reversed, but keep their original positions. The last *L* entries of $P_J^{(K)} s(i)$ are again known, and are then replicated as cyclic prefixes. For this *special case,* we depict the transmitted sequences in Fig. 3. In this format, the data block d(i) is surrounded by two known blocks, that correspond to the pre-amble and post-amble. Our general design based on the CP structure includes this known pre- and post- ambles as a special case.

Notice that the pre-amble and post-amble have not been properly designed in some conventional systems. The consequence is that "edge effects" appear for transmissions with finite block length, and an approximation on the order of O (L/J) has to be made in order to apply Viterbi's decoding algorithm. This approximation amounts to nothing but the fact that a linear convolution can be approximated by a circular convolution when the block size is much larger than the channel order. By simply enforcing a CP structure to obtain circulant convolutions, Viterbi's algorithm can be applied to our proposed AP-CP-only with *no approximation* whatsoever, regardless of the block length and the channel order, as will be clear soon.

*E. ZP-only*

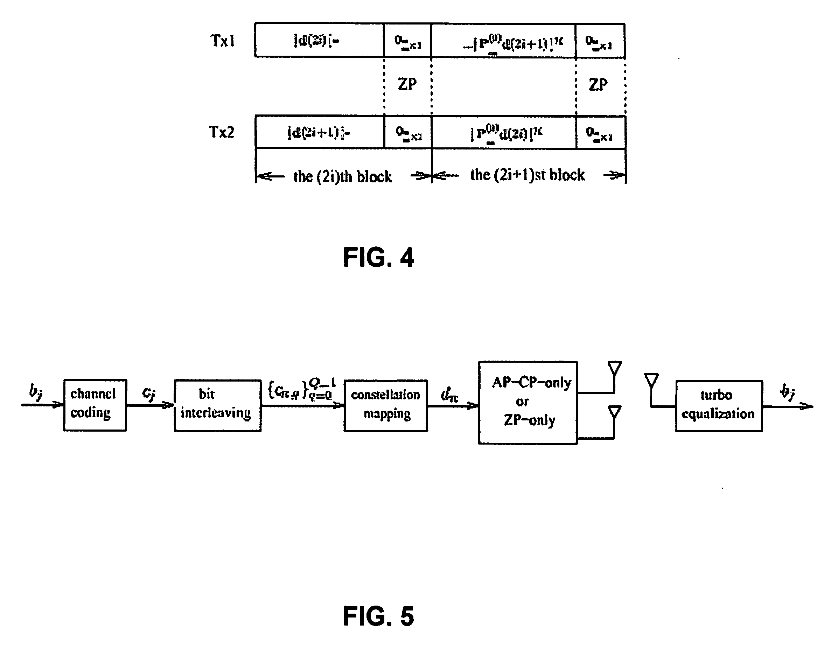

Suppose now that in AP-CP-only, we let b(t) = 0 instead of having known symbols drawn from the constellation alphabet, and we fix $P = P_J^{(K)}$. Now, the adjacent data blocks are guarded by two zero blocks, each having length L, as depicted in Fig. 3. Since the channel has only order L, presence of 2L zeros in the middle of two adjacent data blocks is not necessary. Keeping only a single block of L zeros corresponds to removing the CP-insertion operation at the transmitter. On the other hand, one could view that the zero block in the previous block serves as the CP for the current block, and thus all derivations done for CP-based transmission are still valid. The resulting transmission format is shown in Fig. 4, which achieves higher bandwidth efficiency than AP-CP-only. We term this scheme as ZP-only, where *J=K + L* and *P = J.*

By mathematically viewing ZP-only as a special case of AP-CP-only with b(i) = 0, it is clear that the maximum diversity is achieved. In addition to the rate improvement, ZP-only also saves the transmitted power occupied by CP and known symbols.

For convenience, we list all aforementioned schemes in Table 1, assuming a rich scattering environment. Power loss induced by the cyclic prefix and the known symbols, is also considered. It certainly becomes negligible when *K » L.*

*F. Links with multicarrier transmissions*

In this section, we link single carrier with digital multicarrier (OFDM based) schemes. We first examine the transmitted blocks on two consecutive time intervals. For LP-CP-only, the transmitted space-time matrix is:

$$\begin{bmatrix} u_1(2i) & u_1(2i+1) \\ u_2(2i) & u_2(2i+1) \end{bmatrix} = \begin{bmatrix} \mathbf{T}_{cp}\Theta\mathbf{d}(2i) & -\mathbf{T}_{cp}\mathbf{P}\Theta^*\mathbf{d}^*(2i+1) \\ \mathbf{T}_{cp}\Theta\mathbf{d}(2i+1) & \mathbf{T}_{cp}\mathbf{P}\Theta^*\mathbf{d}^*(2i) \end{bmatrix} \begin{array}{l} \rightarrow \text{time} \\ \downarrow \text{space} \end{array}, \qquad (25)$$

If let. $\mathbf{P} = \mathbf{P}_J^{(1)}$ and $\Theta = \mathbf{F}_J^{\mathcal{H}}\Psi$, we obtain for a general matrix $\Psi$:

$$\begin{bmatrix} u_1(2i) & u_1(2i+1) \\ u_2(2i) & u_2(2i+1) \end{bmatrix} = \begin{bmatrix} \mathbf{T}_{cp}\mathbf{F}_J^{\mathcal{H}}\Psi\mathbf{d}(2i) & -\mathbf{T}_{cp}\mathbf{F}_J^{\mathcal{H}}\Psi^*\mathbf{d}^*(2i+1) \\ \mathbf{T}_{cp}\mathbf{F}_J^{\mathcal{H}}\Psi\mathbf{d}(2i+1) & \mathbf{T}_{cp}\mathbf{F}_J^{\mathcal{H}}\Psi^*\mathbf{d}^*(2i) \end{bmatrix} \begin{array}{l} \rightarrow \text{time} \\ \downarrow \text{space} \end{array}. \qquad (26)$$

TABLE 1

| SUMMARY OF SINGLE CARRIER SCHEMES IN RICH-SCATTERING ENVIRONMENTS | | | | |
|---|---|---|---|---|
| | Rate $R$ | Diversity $G_d$ | Power Loss (dB) | Features |
| CP-only | $\frac{K}{K+L}\log_2|\mathcal{A}|$ | 2 | $10\log_{10}\frac{K+L}{K}$ | constant modulus (C-M)- |
| non-redundant LP-CP-only | $\frac{K}{K+L}\log_2|\mathcal{A}|$ | $2(L+1)$ | $10\log_{10}\frac{K+L}{K}$ | constellation-specific precoder constant modulus |
| redundant LP-CP-only | $\frac{K}{K+2L}\log_2|\mathcal{A}|$ | $2(L+1)$ | $10\log_{10}\frac{K+L}{K}$ | constellation-independent Not C-M in general |
| AP-CP-only | $\frac{K}{K+2L}\log_2|\mathcal{A}|$ | $2(L+1)$ | $10\log_{10}\frac{K+2L}{K}$ | constellation-independent constant modulus |
| ZP-only | $\frac{K}{K+L}\log_2|\mathcal{A}|$ | $2(L+1)$ | 0 | constellation-independent C-M except zero guards |
| - only if information symbols have constant- modulus, e.g., drawn from PSK constellations. | | | | |

If $\Psi = \mathbf{I}\,K$, then (26) corresponds to the space-time block coded OFDM proposed in Y.Li,J.C.Chung,andN.R.Sollenberger,"Transmitter diversity for OFDM systems and its impact on high-rate data wireless networks," IEEE Journal on Selected Areas in Communications, vol. 17, no.7, pp.1233-1243, July1999. Designing $\Psi \neq \mathbf{I}\,\mathbf{K}$ introduces linear precoding across OFDM subcarriers, as proposed in other conventional techniques. Therefore, LP- CP-only includes linear precoded space-time OFDM as a special case by selecting the precoder $\Phi$ and the permutation P appropriately. Although linear precoding has been proposed for space time OFDM systems, the diversity analysis has not been provided. The link we introduce here reveals that the maximum diversity gain is also achieved by linearly precoded ST-OFDM with the Vandermonde precoders.

Interestingly, linearly precoded OFDM can even be converted to zero padded transmissions. Indeed, choosing

$\Psi$ to be the first K columns of $\mathbf{F}_J$, we obtain the transmitted block as: $\mathbf{u}(i) = \mathbf{T}_{cp}\mathbf{F}_J^{\mathcal{H}}\Psi\mathbf{d}(i) = [\mathbf{0}_{L\times1}^T, \mathbf{d}^T(i), \mathbf{0}_{L\times1}^T]^T$,

which inserts zeros both at the top and at the bottom of each data block.

*G. Capacity Result*

We now analyze the capacity of the space time block coding format of (1). The equivalent channel input-output relationship, after receiver processing, is described by (13) as: $z = \overline{D}_{12}\mathbf{F}_J\mathbf{s} + \eta$, where we drop the block index for brevity. Let $I(z; s)$ denote the mutual information between z and s, and recall that $I(z; s)$ is maximized when s is Gaussian distribute. Due to the lack of channel knowledge at the transmitter, the transmission power is equally distributed among

symbols, with $\mathbf{R}_s = E\{\mathbf{s}\mathbf{s}^{\mathcal{H}}\} = \sigma_s^2 \mathbf{I}_J$. Taking into account the CP of length L, the channel capacity, for a fixed channel realization, is thus:

$$C_J = \frac{1}{J+L} \max \mathcal{I}(\mathbf{z}; \mathbf{s}) = \frac{1}{J+L} \log_2 \det \left( \mathbf{I}_J + \frac{\sigma_s^2}{N_0} \bar{\mathcal{D}}_{12} \mathbf{F}_J \mathbf{F}_J^{\mathcal{H}} \bar{\mathcal{D}}_{12} \right)$$
$$= \frac{1}{J+L} \sum_{n=0}^{J-1} \log_2 \left( 1 + \frac{\sigma_s^2}{N_0} (|H_1(e^{j\frac{2\pi n}{J}})|^2 + |H_2(e^{j\frac{2\pi n}{J}})|^2) \right). \tag{27}$$

Define $E_s = 2\sigma_s^2$ as the total transmitted power from two antennas per channel use. As the block size J increases, we obtain

$$C_{J \to \infty} = \int_0^1 \log_2 \left( 1 + \frac{E_s}{2N_0} (|H_1(e^{j2\pi f})|^2 + |H_2(e^{j2\pi f})|^2) \right) df. \tag{28}$$

The capacity for frequency selective channels with multiple transmit and receive antennas has been described with conventional techniques. The result in (28) coincides with that of some of these techniques when we have two transmit antennas and one receive antenna. Therefore, our proposed transmission format in (1) does not incur capacity loss in this special case. This is consistent with techniques where the Alamouti coding is shown to achieve capacity for frequency-flat fading channels with such an antenna configuration. To achieve capacity for systems with two transmit antennas and a single receive antenna, it thus suffices to deploy suitable one-dimensional channel codes, or scalar codes.

II. EQUALIZATION AND DECODING

Let $\bar{z}(i) := z(i)$ for CP-only, LP-CP-only, ZP-only, and $\bar{z}(i) := z(i) - \bar{D}_{12}F_J T_2 b(i)$ for AP-CP-only. With this convention, we can unify the equivalent system output after the linear receiver processing as:

$$\bar{\mathbf{z}}(i) = \mathbf{F}_J \Theta \mathbf{d}(i) + \eta(i) = \mathbf{A}\mathbf{d}(i) + \eta(i), \tag{29}$$

where A := $F_J \Theta$, the noise $\eta(i)$ is white with covariance $\sigma_w^2 \mathbf{I}_J$, and the corresponding $\Theta$ is defined as in Section I.

Brute-force ML decoding applied to (29) requires $|A|^K$ enumerations, which becomes certainly prohibitive as the constellation size $|A|$ and/or the block length $K$ increases. A relatively faster near-ML search is possible with the sphere decoding (SD) algorithm, which only searches for vectors that are within a sphere centered at the received symbols. The theoretical complexity of SD is polynomial in $K$, which is lower than exponential, but still too high for $K > 16$. Only when the block size $K$ is small, the SD equalizer can be adopted to achieve near-ML performance at a manageable complexity. The unique feature of SD is that the complexity does not depend on the constellation size. Thus, SD is suitable for systems with small block size $K$, but with large signal constellations.

We now turn our attention to low-complexity equalizers by trading off performance with complexity. Linear zero forcing (ZF) and minimum mean square error (MMSE) block equalizers certainly offer low complexity alternatives. The block MMSE equalizer is:

$$\Gamma_{mmse} = (\mathbf{A}^{\mathcal{H}}\mathbf{A} + \sigma_w^2/\sigma_s^2 \mathbf{I}_K)^{-1} \mathbf{A}^{\mathcal{H}}, \tag{30}$$

where we have assumed that the symbol vectors are white with covariance matrix $R_0 = E\{s(i)s^H((i)\} = \sigma_s^2 \mathbf{I}_K$. The MMSE equalizer reduces to the ZF equalizer by setting $\sigma_w^2 = 0$ in (30).

For non-redundant LP-CP-only with $\Theta = \Delta(\alpha)$, we further simplify (30) to

$$\Gamma_{mmse} = \Delta(\alpha^*) \mathbf{F}_K^{\mathcal{H}} [\bar{\mathcal{D}}_{12}^2 + \sigma_w^2/\sigma_s^2 \mathbf{I}_N]^{-1} \bar{\mathcal{D}}_{12}, \tag{31}$$

*A. ML decoding for AP-CP-only and ZP-only*

For AP-CP-only and ZP-only, we have

$$\mathbf{z} = \bar{\mathcal{D}}_{12} \mathbf{F}_J \mathbf{s} + \eta, \tag{32}$$

where we drop the block index i for simplicity. Distinct from other systems, AP-CP-only and ZP-only assure that s has the last L entries known, and the first $K$ entries drawn from the finite alphabet $A$.

In the presence of white noise, ML decoding can be expressed as:

$$\hat{\mathbf{s}}_{ML} = \arg\max \ln P(\mathbf{z}|\mathbf{s}) = \arg\max \{-\|\mathbf{z} - \bar{\mathcal{D}}_{12} \mathbf{F}_J \mathbf{s}\|^2 / N_0\}. \tag{33}$$

We next simplify (33), starting with

$$\begin{aligned}
-\|\mathbf{z} - \bar{\mathcal{D}}_{12} \mathbf{F}_J \mathbf{s}\|^2 &= 2\mathrm{Re}\{\mathbf{s}^{\mathcal{H}} \mathbf{F}_J^{\mathcal{H}} \bar{\mathcal{D}}_{12} \mathbf{z}\} - \mathbf{s} \mathbf{F}_J^{\mathcal{H}} \bar{\mathcal{D}}_{12}^2 \mathbf{F}_J \mathbf{s} - \mathbf{z}^{\mathcal{H}} \mathbf{z} \\
&= 2\mathrm{Re}\{\mathbf{s}^{\mathcal{H}} \mathbf{r}\} - \sum_{\mu=1}^{2} \|\bar{\mathbf{H}}_\mu \mathbf{s}\|^2 - \mathbf{z}^{\mathcal{H}} \mathbf{z},
\end{aligned} \tag{34}$$

where $\mathbf{r} := \mathbf{F}_J^{\mathcal{H}} \bar{\mathcal{D}}_{12} \mathbf{z}$. We let $r_n := [r]_n$, and $s_n := [s]_n$. Recognizing that $\bar{H}_\mu s$ expresses nothing but a circular convolution between the channel h and s, we have $[\bar{\mathbf{H}}_\mu \mathbf{s}]_n = \sum_{t=0}^{L} h_\mu(t) s_{(n-t) \bmod J}$. Hence, we obtain:

$$\hat{\mathbf{s}}_{ML} = \arg\max \sum_{n=0}^{J-1} \left\{ \frac{1}{N_0} \left[ 2\mathrm{Re}\{s_n^* r_n\} - \sum_{\mu=1}^{2} |\sum_{t=0}^{L} h_\mu(t) s_{(n-t)\bmod J}|^2 \right] \right\}. \tag{35}$$

For each $n = 0,1, \ldots , J$, let us define a sequence of state vectors as: $\zeta_n = [s_{(n-1)\bmod J}, \ldots, s_{(n-t)\bmod J}]^T$, out of which the first and the last states are known: $\zeta_O = \zeta_J = [s_{J-1},\ldots, s_{J-L}]^T$. The symbol sequence $s_0, \ldots , s_{J-1}$ determines an unique path evolving from the known initial state $\zeta_O$ to the known final state $\zeta_J$. Thus, Viterbi's algorithm is applicable. Specifically, we have:

$$\hat{\mathbf{s}}_{ML} = \arg\max \sum_{n=0}^{J-1} f(\zeta_n, \zeta_{n+1}), \tag{36}$$

where $\zeta(\zeta_n, \zeta_{n+1})$ is the branch metric, that is readily obtainable from (35). The explicit recursion formula for Viterbi's Algorithm is well known.

We now simplify the branch metric further. We first have $\sum_{\mu=1}^{2} \|\bar{\mathbf{H}}_\mu \mathbf{s}\|^2 = \mathbf{s}^{\mathcal{H}} \sum_{\mu=1}^{2} (\tilde{\mathbf{H}}_\mu^{\mathcal{H}} \tilde{\mathbf{H}}_\mu) \mathbf{s}$. The matrix

$\breve{\mathbf{H}} := \sum_{\mu=1}^{2} (\bar{\mathbf{H}}_{\mu}^{\mathcal{H}} \bar{\mathbf{H}}_{\mu})$ has (p,q)th entry:

$$[\bar{\mathbf{H}}]_{p,q} = \sum_{\mu=1}^{2} \sum_{n=0}^{J-1} h_{\mu}^{*}((k-p) \bmod J) h_{\mu}((k-q) \bmod J). \qquad (37)$$

Let us now select J > 2L, and define

$$\beta_n = \sum_{\mu=1}^{2} \sum_{l=0}^{L} h_{\mu}^{*}(l) h_{\mu}(n+l), \text{ for } n = 0, 1, \dots, L. \qquad (38)$$

It can be easily verified that the first column of H is $[\beta_0, \beta_1, \dots, \beta_L, 0, \dots, 0, \beta_L^{*}, \dots, \beta_1^{*}]^{T}$. Let $\breve{\mathbf{H}}$ denote the circulant matrix with first column $((1/2)\beta_0, \beta_1, \dots, \beta_L, 0, \dots, 0]^{T}$. Because $\bar{\mathbf{H}}$ is circulant and Her mitian, $\bar{\mathbf{H}}$ can be decomposed into: $\bar{\mathbf{H}} = \breve{\mathbf{H}} + \breve{\mathbf{H}}^{H}$. We thus obtain $\mathbf{s}^{\mathcal{H}} \bar{\mathbf{H}} \mathbf{s} = 2\mathrm{Re}\{\mathbf{s}^{\mathcal{H}} \breve{\mathbf{H}} \mathbf{s}\}$. Recognizing $[\breve{\mathbf{H}} \mathbf{s}]_n = (1/2)\beta_0 s_n + \sum_{l=1}^{L} \beta_l s_{(n-l) \bmod J}$, and combining with (35), we obtain a simplified metric as:

$$f(\zeta_n, \zeta_{n+1}) = \frac{2}{N_0} \mathrm{Re} \left\{ s_n^{*} \left[ r_n - \frac{1}{2} \beta_0 s_n - \sum_{l=1}^{L} \beta_l s_{(n-l) \bmod J} \right] \right\}. \qquad (39)$$

The branch metric in (39) has a format analogous to the one proposed by Ungerboeck for maximum- likelihood sequence estimation (MLSE) receivers with *single antenna serial* transmissions. For multi-antenna block coded transmissions, a similar metric has been suggested in conventional systems. The systems, however, can suffer from "edge effects" for transmissions with finite block length, resulting an approximation on the order of O (L/J), while our derivation here is exact. Our CP based design assures a circular convolution, while the linear convolution in some conventional systems approximates well a circulant convolution only when J >> L. Note also that we allow for an arbitrary permutation matrix **P**, which includes the time-reversal in as a special case. Furthermore, a known symbol vector b can be placed in an arbitrary position within the vector s for AP-CP-only. If the known symbols occupy positions B - L, ... , B - 1, we just need to redefine the states as

$$\zeta_n = \left[ s_{(n+B-1) \bmod J}, \dots, s_{(n+B-L) \bmod J} \right]^{T}.$$

Notice that for channels with order L, the complexity of Viterbi's algorithm is O ( $|A|^L$) per symbol; thus, ML decoding with our exact application of Viterbi's algorithm should be particularly attractive for transmissions with small constellation size, over relatively short channels.

*B. Turbo equalization for coded AP-CP-only and ZP-only*

So far, we have only considered uncoded systems, and established that full diversity is achieved. To further improve system performance by enhancing also coding gains, conventional channel coding can be applied to our systems. For example, outer convolutional codes can be used in AP-CP-only and ZP-only, as depicted in FIG. 5. Other codes such as TCM and turbo codes are applicable as well.

In the presence of frequency selective channels, iterative (turbo) equalization is known to enhance system performance, at least for single antenna transmissions. We here derive turbo equalizers for our coded AP-CP-only and ZP-only multi-antenna systems.

To enable turbo equalization, one needs to find the *a posteriori* probability on the transmitted symbols $s_n$ based on the received vector z. Suppose each constellation point $s_n$ is determined by Q = $\log_2 |A|$ bits $\{c_{n,0}, \dots, c_{n,Q-1}\}$. Let us consider the log likelihood ratio (LLR):

$$\mathcal{L}_{n,q} = \ln \frac{P(c_{n,q} = +1|\mathbf{z})}{P(c_{n,q} = -1|\mathbf{z})}, \qquad \forall n \in [0, J-1], \; q \in [0, Q-1]. \qquad (40)$$

The log-likelihood ratio in (40) can be obtained by running two generalized Viterbi recursions: one in the forward direction and one in the backward direction period. Our branch metric is modified as follows:

$$g(\zeta_n, \zeta_{n+1}) = f(\zeta_n, \zeta_{n+1}) + \ln P(\zeta_{n+1}|\zeta_n). \qquad (41)$$

This modification is needed to take into account the *a priori* probability $P(\zeta_{n+1}|\zeta_n)$, determined by the extrinsic information from the convolutional channel decoders during the turbo iteration. When the transition from $\zeta_n$ to $\zeta_{n+1}$ is caused by the input symbol $s_n$, we have $l_n P(\zeta_{n+1}|\zeta_n) = \ln P(s_n)$. We assume that the bit interleaver in Fig. 5 renders the symbols $s_n$ independent and equal likely, such that $\ln P(s_n) = \sum_{q=0}^{Q-1} \ln P(c_{n,q})$, which in turn can be determined by the LLRs for bits $\{c_{n,q}\}_{q=0}^{Q-1}$.

Finally, we remark that one could also adopt the known turbo decoding algorithm that is based on MMSE equalizers. This iterative receiver is applicable not only to AP-CP-only and ZP-only, but also to CP-only and LP-CP-only systems.

*C. Receiver Complexity*

Omitting the complexity of permutation and diagonal matrix multiplication, the linear processing to reach (13) only requires one size-J FFT per block, which amounts to $O(\log_2 J)$ per information symbol,

Channel equalization is then performed based on (13) for each block. We notice that the complexity is the same as the equalization complexity for single antenna block transmissions over FIR channels [43]. We refer the readers to [43] for detailed complexity comparisons of the different equalization options. For coded AP-CP-only and ZP-only, the complexity of turbo equalization is again the same as that of single antenna transmissions [13].

In summary, the overall receiver complexity for the two transmit antenna case is comparable to that of single antenna transmissions, with only one additional FFT per data block. This nice property originates from the orthogonal space-time block code design, that enables linear ML processing to collect antenna diversity. Depending desirable/ affordable diversity-comptexity tradeoffs, the designer is then provided with the flexibility to collect extra multipath-diversity gains.

III. EXTENSION TO MULTIPLE ANTENNAS

In Section I, we focused on $N_t = 2$ transmit- and $N_r = 1$ receive- antennae. In this section, we will extend our system design to the general case with $N_t > 2$ and/or $N_r > 1$ antennas. For each $\mu = 1,..., N_t$ and $v = 1,...,N_r$, we denote the channel between the $\mu$th transmit- and the $v$th receive-antennae as $b_{\mu v} := [h_{\mu v}(0),..., h_{\mu v}(L)]^T$, and as before we model it as a zero-mean, complex Gaussian vector with covariance matrix $R_{b2\mu v}$. Correspondingly, we define the effective channel order $\overline{L}_{\mu v} := \text{rank}\{R_{h,jev}\} -1$, which for a sufficiently rich scattering environment becomes $\overline{L}_{\mu v} = L$.

Transmit diversity with $N_t > 2$ has been addressed in for OFDM based multicarrier transmissions over FIR channels by applying the orthogonal ST block codes of on each OFDM subcarrier. Here, we extend the orthogonal designs to single carrier block transmissions over frequency selective channels.

We will review briefly generalized orthogonal designs to introduce notation, starting with the basic definitions given in the context of frequency-flat channels: **Definition 1**: Define $x := [\chi_1,..., \chi_{N_t}]^T$, and let $g_r(x)$ be an $N_d \times N_t$ matrix with entries $0, \pm x_1, ..., \pm x_N$. If $\mathcal{G}_r^T(\mathbf{x})\mathcal{G}_r(\mathbf{x}) = \alpha(x_1^2 + \cdots + x_{N_s}^2)\mathbf{I}_{N_t}$ with $\alpha$ positive, then $g_r(x)$ is termed a generalized real orthogonal design (GROD) in variables $x_1,...,x_N$, of size $N_d \times N_t$ and rate $R = N_x/N_t$. **Definition 2:** Define $x := [x_1,..., x_N]^T$, and let $g_c(x)$ be an $N_d \times N_t$ matrix with entries $0, \pm x_1, \pm x_1, ..., \pm x_{Na}, \pm x N_a$ If $\mathcal{G}_c^{\mathcal{H}}(\mathbf{x})\mathcal{G}_c(\mathbf{x}) = \alpha(|x_1|^2 + \cdots + |x_{N_s}|^2)\mathbf{I}_{N_t}$ with a positive, then $g_c(x)$ is termed a generalized real orthogonal design (GCOD) in variables $x_1,...,x_N$, of size $N_d \times N_t$ and rate

Explicit construction of $g_r(x)$ with R = 1 was discussed in [34], where it was also proved that the highest rate for $g_c(x)$ is 1/2 when $N_t > 4$. When $N_t = 3,4$, there exist some sporadic codes with rate R = 3/4. Although the orthogonal designs with R = 3/4 for $N_t = 3$, 4 have been incorporated for multicarrier transmissions, we will not consider them in our single carrier block transmissions here; we will only consider the R = 1/2 GCOD designs primarily because GCOD $g_c$ (x) of R = 1/2 can be constructed using the following steps ($N_a = 4$ for $N_t = 3,4$, while $N_a = 8$ for $N_t = 5, 6, 7, 8$ [34]):

s1) construct GROD $g_r(x)$ of size $N_a \times N_t$ with $R = 1$;

s2) replace the symbols $x_1$, ... ,$x_{N_a}$ in $g_r(x)$ by their conjugates $x_1^*, \ldots, x_{N_a}^*$ to arrive at $g_r(X')$;

s3) form $\mathcal{G}_c(x) = [\mathcal{G}_r^T(x), \mathcal{G}_r^T(x^*)]^T.$

As will be clear soon, we are explicitly taking into account the fact that all symbols from the upper-part of $g_c(x)$ are un-conjugated, while all symbols from the lower-part are conjugated. The rate loss can be as high as 50%, when $N_t > 2$.

With $N_t > 2$, the space-time mapper takes $N_a$ consecutive blocks to output the following $N_t J \times N_d$ space time coded matrix ($N_d = 2N_a$.)

$$\bar{S}(i) = \mathcal{E}\left\{s(iN_a), \ldots, s(iN_a + N_a - 1)\right\} = \begin{bmatrix} \bar{s}_1(iN_d) & \cdots & \bar{s}_1(iN_d + N_d - 1) \\ \vdots & \ddots & \vdots \\ \bar{s}_{N_t}(iN_d) & \cdots & \bar{s}_{N_t}(iN_d + N_d - 1) \end{bmatrix} \begin{matrix} \rightarrow \text{time}. \\ \\ \downarrow \text{space} \end{matrix} \quad . \quad (42)$$

The design steps are summarized as follows:

d1) construct $G_c$ of size $2N_a \times N_t$ in the variables $x_1,..., x_N$, as in s1)-s3);

d2) Replace $x_1,..., x_N$, in $\mathcal{G}_c^T$ by $s(iN_c), \ldots , s(tN_c + N_a - 1)$:

d3) Replace $x_1^*, \ldots, x_{N_a}^*$ in $\mathcal{G}_c^T$ by $Ps''(iN_a),..., Ps'(iN_0 + N_0 - 1)$, where P is taken properly for different schemes as explained in Section 1.

At each block transmission slot i, $\bar{s}_{ie}(i)$ is forwarded to the $\mu$th antenna, and transmitted through the FIR channel after CP insertion. Each receive antenna processes blocks independently as follows: The receiver removes the CP, and collects $N_d = 2N_c$ blocks $x(iN_d),...,x(iN_d + N_d - 1)$. Then FFT is performed on the first $N_a$ blocks $x(iN_d),... x(iN_d + N_a - 1)$, while permutation and conjugation is applied to the last $N_a$ blocks: $Px'(iN_d + N_a), \ldots , Px^a(iN_d + N_d - 1)$, followed by FFT processing. Coherently combining the FFT outputs as we did for the two antennae case to derive (13), we obtain on each antenna the equivalent output after the optimal linear processing:

$$z_\nu(i) = \bar{D}_\nu \mathbf{F}_J s(i) + \eta_\nu(i), \quad (43)$$

where $\bar{\mathcal{D}}_\nu := [\sum_{\mu=1}^{N_t} \mathcal{D}_{\mu,\nu}^* \mathcal{D}_{\mu,\nu}]^{1/2}$ and $D_{\mu,v} := \text{diag}(\bar{h}_{\mu v}) = \text{diag}(Vh_{\mu p})$.

We next stack the $z_v(i)$ blocks to form $\bar{z}(i) = [z_1^T(i), \ldots, z_{N_r}^T(i)]^T$ (likewise for $\bar{\eta}(i)$), and define B := $[\bar{D}1,..., \bar{D}_{N_r}]^T$, to obtain: $\bar{z}(i) = BF_J s(i) - \bar{\eta}(i)$. Defining $\bar{B} := [\sum_{\mu=1}^{N_t} \sum_{\nu=1}^{N_r} \mathcal{D}_{\mu,\nu}^* \mathcal{D}_{\mu,\nu}]^{1/2}$, we have $B^H B = \bar{B}^2$. Therefore, we can construct a matrix $U_b := B\bar{B}^{-1}$, which has orthonormal columns $U_b^H U_b = I_J$, and satisfies $U_b^H B = \bar{B}$. As $U_b$ and **B** share range spaces, multiplying $U_b^H$ by $\bar{z}(i)$ incurs no loss of optimality, and leads to the following equivalent block:

$$z(i) := U_b^{\mathcal{H}} \tilde{z}(i) = \bar{B} F_J s(i) + \eta(i), \qquad (44)$$

where the noise $\eta(i)$ is still white. Now the distance between z and z', corresponding to two different symbol blocks d and d', becomes:

$$d^2(z, z') = \sum_{\mu=1}^{N_t} \sum_{\nu=1}^{N_r} \| D_c V h_{\mu\nu} \|^2. \qquad (45)$$

Comparing (45) with (15), the contribution now comes from $N_t N_r$ multipath channels. Following the same steps as in Section I, the following result can be established :

Proposition 1: *The maximum achievable diversity order is* $\sum_{\mu=1}^{N_t} \sum_{\nu=1}^{N_r} (\tilde{L}_{\mu\nu} + 1)$ *with* $V_t$ *transmit- and* $N_r$ *receive- antennas, which equals* $N_t N_r(L + 1)$ *when the channel correlation has full rank.*

> *1. CP-only achieves nrulti-antenna diversity of order* $N_t N_r$;
> *2. LP-CP-only achieves the maximum diversity gain through either non-redundant hut constellation-dependent, or, redundant but constellation-independent precoding;*
> *3. Affine precoded CP-only and ZP-only achieve the maximum diversity gain irrespective of the underlying signal constellation.*

The linear ML processing to reach (44) requires a total of $N_d N_r = 2N_a N_r$ FITs corresponding to each space-time coded block of (42), which amounts to $2N_r$ FFTs per information block. Channel equalization based on (44) incurs identical complexity as in single antenna transmissions. For AP-CP-only and ZP-only, the ML estimate $\hat{s}_{ML}$ = argmax_ $(-\|z- \bar{B}Fs\|^2/N,)$ can be obtained via exact application of Viterbi's algorithm. Relative to the two antenna case detailed in Section II-A, we can basically use the same expression for the branch metric of (39), with two modifications, namely: $r_{lt} = [r]_n$ with $r = F_J^{\mathcal{H}} \bar{B} z,$ and

$$\beta_n = \sum_{\mu=1}^{N_t} \sum_{\nu=1}^{N_r} \sum_{l=0}^{L} h_{\mu\nu}^*(l) h_{\mu\nu}(n+l), \qquad \text{for} \quad n = 0, 1, \ldots, L. \qquad (46)$$

We summarize the general complexity results of this section and those of Section II in the following.

Proposition 2: *The proposed space-time block coded CP-only, LP-CP-only. A P-CP-only and ZP-oaly systems with* $N_t > 2$ ($N_t = 2$) *transmit- and* $N_r$ *receive- antennas require an additional complexity of* O($2N_r \log_2 J$) *(respectively,* O($N_r \log_2 J$)*) per information symbol, relative to their counterparts* with *single transmit- and single receive- antenna, where J is the FFT* size.

IV. SIMULATED PERFORMANCE

In this section, we present simulation results for systems with two transmit- and one receive- antenna. For ease in FFT processing, we always choose the block size J to be a power of 2. In all figures, we define SNR as the average received symbol energy to noise ratio at the receive antenna. For reference, we also depict the (outage) probability that the channel capacity is less than the desired rate, so that reliable communication at this rate is impossible. Specifically, we calculate (28) numerically, we evaluate the outage probability at the targeted rate R as $P(C_{J-100} < R)$ with Monte-Carlo simulations.

Test Case 1 (comparisons for different equalizers): We first set L = 2, and assume that the channels between each transmit and each receive antenna are i.i.d., Gaussian, with covariance matrix I $_{L+1}$/(L+1). We investigate the performance of ZP-only with block sizes: K = 14,and P = J = 16. We adopt QPSK constellations.

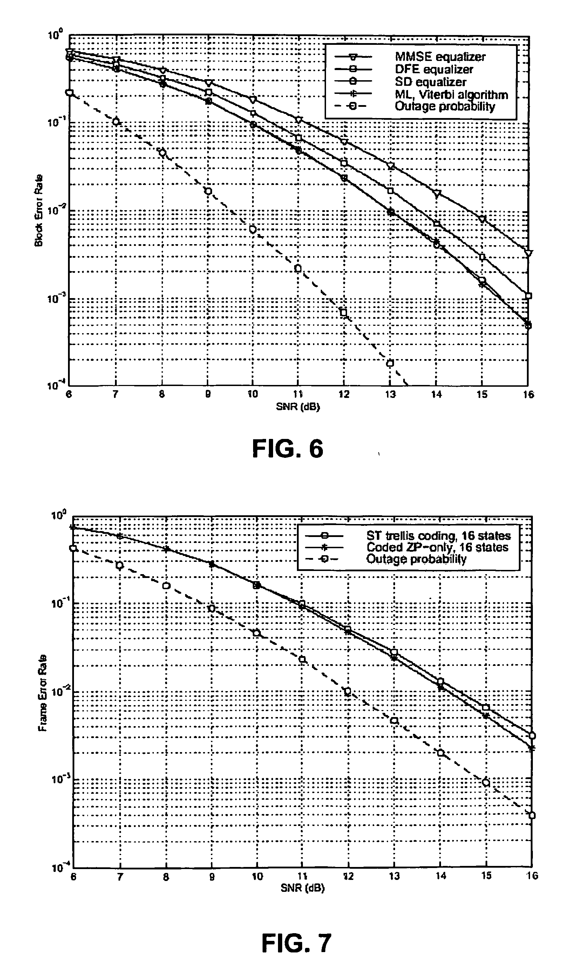

FIG. 6 depicts the block error rate performance corresponding to MMSE, DFE, SD, and ML equalizers. We observe that the SD equalizer indeed achieves near-ML performance, and outperforms the suboptimal block DFE as well as the block MMSE alternatives. Without channel coding, the performance of ZP-only is faraway from the outage probability at rate 2K/(K + L) =1.75 bits per channel use. Test Case 2 (convolutionally coded ZP-only): We here use two i.i.d. taps per FIR channel, i.e., L = 1. We set the block sizes as K = 127, P = J = 128 for our ZP-only system, and use 8-PSK constellation. For convenience, we view each block of length P = 128 as one data frame, with the space time codes applied to two adjacent frames. Within each frame, the information bits are convolutionally coded (CC) with a 16-state rate 2/3 encoder. Omitting the trailing bits to terminate the CC trellis, and ignoring the rate loss induced by the CP since L << K, we obtain a transmission rate of 2 bits per channel use.

Turbo decoding iterations are performed. With the 16-state convolutional code, the frame error rate for ZP-only is within 2.3dB away from the outage probability.

Test Case 3 (convolutionally coded AP-CP-only over EDGE channels): We test the Typical Urban (TU) channel with a linearized GMSK transmit pulse shape, and a symbol duration T = 3.69 $\mu$s as in the proposed third generation TDMA cellular standard EDGE (Enhance Date Rates for GSM Evolution). The channel has order L = 3 and correlated taps. We use QPSK constellations, and set the block size J = 128. We adopt AP-CP-only that guarantees perfectly constant modulus transmissions. Within each frame of 128 symbols, the last 3 are known. Information bits are coded using a 16-state rate 1/2 convolutional code. Taking into account the known symbols, the cyclic prefix, and zero bits to terminate the CC trellis, the overall transmission rate of the proposed AP-CP-only is (128 - 3 - 4)/(128 + 3) = 0.924 bits per channel use, or 250.4 kbps.

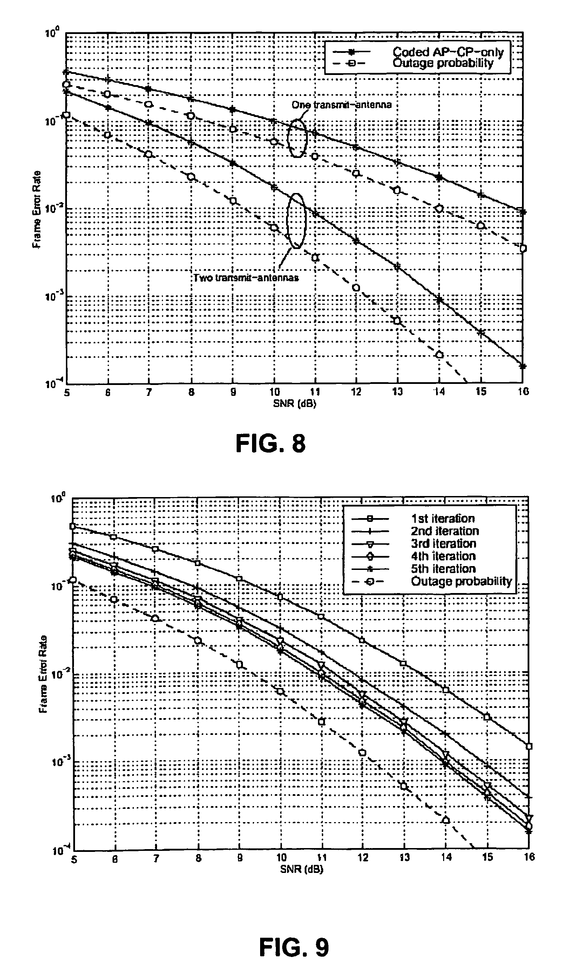

As shown in FIG. 8, the system with two transmit antennas significantly outperforms its counterpart with one transmit antenna. At frame error rate of $10^{-2}$, about 5dB SNR gain has been achieved. FIG. 9 depicts the performance improvement with turbo iterations, which confirms the importance of iterative over non-iterative receivers. A large portion of the performance gain is achieved within three iterations.

Various embodiments of the invention have been described. These and other embodiments are within the scope of the following claims.

**Claims**

1.   A method comprising:

applying a permutation matrix to blocks of symbols of an outbound data stream and generating a space-time block coded matrix of permutated blocks of symbols, wherein the permutation matrix applies a reverse cyclic shift to the symbols;
generating transmission signals from the permutated blocks of symbols; and
communicating the transmission signals through a wireless communication medium (8),
**characterized in that**
the permutation matrix is selected from a plurality of permutation matrices as a function of a symbol index of the outbound data stream, wherein the selected permutation matrix applies the reverse cyclic shift as a function of the symbol index.

2.   The method of claim 1, further comprising generating a space-time block coded matrix having $N_t$ rows, wherein $N_t$ represents a number of transmitters within a transmission device,

3.   The method of claim 2, further comprising:

parsing the outbound data stream of information-bearing symbols to form blocks of K symbols;
precoding the symbols to form blocks having J symbols;
collecting consecutive $N_s$ blocks; and
generating the space-time block coded matrix to have $N_t$ rows and $N_D$*J symbols per row, wherein $N_D$ represents a number of transmission time intervals for communicating the transmission signals.

4.   The method of claim 3, further comprising inserting a cyclic prefix for each of the blocks prior to generating the transmission signals, wherein the cyclic prefix has a length selected as a function of a channel order of the wireless communication medium (8).

5.   The method of claim 3, wherein J > K.

6.   The method of claim 3, wherein J = K.

7. The method of claim 3, wherein $N_t$=2 and $N_D$=2, and applying the permutation matrix comprises applying the permutation matrix to generate the space-time block coded matrix according to the following equation:

$$\begin{bmatrix} s(2i) & -Ps^*(2i+1) \\ s(2i+1) & Ps^*(2i) \end{bmatrix}$$

where P represents a permutation matrix, i represents an index into the blocks of symbols, and s represents symbol block.

8. The method of claim 7, wherein the permutation matrix is drawn from a set of permutation matrices $\left\{P_J^{(n)}\right\}_{n=0}^{J=1}$.

9. The method of claim 7, wherein each row of a second column of the space-time block coded matrix stores a block that is a conjugated and permuted version of a corresponding block from another row of a first column.

10. The method of claim 3, wherein precoding the symbols comprises adding a set of known symbols to each group of K symbols.

11. The method of claim 10, wherein the set of known symbols comprises a preamble and a post amble.

12. The method of claim 3, further comprising:

receiving a signal from the wireless communication medium (8), wherein the
signal comprises a stream of received symbols;
parsing the received symbols of the input signal to form blocks of J symbols;
applying the permutation matrix to the blocks of the received symbols; and separately demodulating transmitted
data from the permutated blocks of received symbols.

13. The method of claim 12, further comprising conjugating and applying a Fast Fourier Transform (FFT) to the blocks.

14. An apparatus comprising:

an encoder (12) to apply a permutation matrix to blocks of information bearing symbols and to generate a space-time block coded matrix of permutated blocks of symbols, wherein the permutation matrix applies a reverse cyclic shift to the symbols;
a plurality of pulse shaping units (13) to generate a plurality of transmission signals from the symbols of the space-time block coded matrix; and
a plurality of antennae (14) to communicate the transmission signals through a wireless communication medium (8),
**characterized in that**
the encoder is adapted to select the permutation matrix from a plurality of permutation matrices as a function of a symbol index, and to apply the selected permutation matrix to perform a reverse cyclic shift as a function of the symbol index.

15. The apparatus of claim 14, wherein the encoder (12) is adapted to collect consecutive $N_s$ blocks within a buffer, to apply a permutation matrix to the $N_s$ blocks, and to form a space-time block coded matrix having $N_t$ rows of symbols.

16. The apparatus of claim 14, further comprising a precoder (11) to precode the symbols to form blocks having J symbols, wherein each row of the space-time block coded matrix contains $N_D$*J symbols, wherein $N_D$ represents a number of block transmission time intervals for transmitting the space-time matrix.

17. The apparatus of claim 16, wherein the precoder is adapted to add a set of known symbols to each group of K symbols.

18. The apparatus of claim 17, wherein the set of known symbols comprises a preamble and a post amble.

**19.** The apparatus of claim 17, wherein J > K.

**20.** The apparatus of claim 17, wherein J = K.

**21.** The apparatus of claim 15, wherein $N_t = 2$ and the encoder is adapted to apply the permutation matrix to generate the space-time block coded matrix according to the following equation:

$$\begin{bmatrix} s(2i) & -Ps^{\bullet}(2i+1) \\ s(2i+1) & Ps^{\bullet}(2i) \end{bmatrix}$$

where P represents a permutation matrix, i represents an index into the blocks of symbols, and s represents symbol block.

**22.** The apparatus of claim 21, wherein the permutation matrix is drawn from a set of permutation matrices $\left\{ P_J^{(n)} \right\}_{n=0}^{J=1}$.

**23.** The apparatus of any of claims 14 to 22, wherein the apparatus comprises a base station within a wireless communication system (2).

**24.** The apparatus of any of claims 14 to 22, wherein the apparatus comprises one of a cellular phone, a personal digital assistant, a laptop computer, a desktop computer, a two-way communication device.

**25.** The apparatus of any of claims 14 to 24, wherein the apparatus is adapted to select a cyclic prefix as a length selected as a function of a channel order of the wireless communication medium and is adapted to insert the cyclic prefix for each of the blocks prior to generating the transmission signals.

**Patentansprüche**

**1.** Verfahren, das umfasst:

Anwenden einer Permutations-Matrix auf Blöcke von Symbolen eines ausgehenden Datenstroms und Erzeugen einer Raum-Zeit-Block-Codierung unterzogenen Matrix permutierter Blöcke von Symbolen, wobei die Permutations-Matrix eine umgekehrte zyklische Verschiebung auf die Symbole anwendet;
Erzeugen von Sendesignalen aus den permutierten Blöcken von Symbolen; und
Übertragen der Sendesignale über ein Drahtlos-Kommunikationsmedium (8),
**dadurch gekennzeichnet, dass**
die Permutations-Matrix aus einer Vielzahl von Permutations-Matrizen als eine Funktion eines Symbol-Index des ausgehenden Datenstroms ausgewählt wird, wobei die ausgewählte Permutations-Matrix die umgekehrte zyklische Verschiebung als eine Funktion des Symbol-Index anwendet.

**2.** Verfahren nach Anspruch 1, das des Weiteren Erzeugen einer Raum-Zeit-Block-Codierung unterzogenen Matrix mit $N_t$ Reihen umfasst, wobei $N_t$ eine Anzahl von Sendeeinrichtungen innerhalb einer Sendevorrichtung darstellt.

**3.** Verfahren nach Anspruch 2, das des Weiteren umfasst:

Parsen des ausgehenden Datenstroms informationstragender Symbole, um Blöcke von K Symbolen auszubilden;
Vorcodieren der Symbole, um Blöcke mit J Symbolen auszubilden;
Sammeln $N_s$ aufeinanderfolgender Blöcke; und
Erzeugen der Raum-Zeit-Block-Codierung unterzogenen Matrix, so dass sie $N_t$ Reihen und $N_D{}^*J$ Symbole pro Reihe hat, wobei $N_D$ eine Anzahl von Sende-Zeitintervallen zum Übertragen der Sendesignale darstellt.

**4.** Verfahren nach Anspruch 3, das des Weiteren Einfügen eines zyklischen Präfix für jeden der Blöcke vor Erzeugen der Sendesignale umfasst, wobei das zyklische Präfix eine Länge hat, die als eine Funktion einer Kanalordnung des Drahtlos-Kommunikationsmediums (8) ausgewählt wird.

5. Verfahren nach Anspruch 3, wobei J > K.

6. Verfahren nach Anspruch 3, wobei J = K.

7. Verfahren nach Anspruch 3, wobei $N_t$=2 und $N_D$=2 und Anwenden der Permutations-Matrix Anwenden der Permutations-Matrix zum Erzeugen der Raum-Zeit-Block-Codierung unterzogenen Matrix entsprechend der folgenden Gleichung umfasst:

$$\begin{bmatrix} s(2i) & -Ps^{*}(2i+1) \\ s(2i+1) & Ps^{*}(2i) \end{bmatrix}$$

wobei P eine Permutations-Matrix darstellt, i einen Index in die Blöcke der Symbole darstellt und s einen Symbol-Block darstellt.

8. Verfahren nach Anspruch 7, wobei die Permutations-Matrix aus einem Satz von Permutations-Matrizen

$$\left\{ P_J^{(n)} \right\}_{n=0}^{J=1}$$ gezogen wird.

9. Verfahren nach Anspruch 7, wobei jede Reihe einer zweiten Spalte der Raum-Zeit-Block-Codierung unterzogenen Matrix einen Block speichert, der eine konjugierte und permutierte Version eines entsprechenden Blocks aus einer anderen Reihe einer ersten Spalte ist.

10. Verfahren nach Anspruch 3, wobei Vorcodieren der Symbole Addieren eines Satzes bekannter Symbole zu jeder Gruppe von K Symbolen umfasst.

11. Verfahren nach Anspruch 10, wobei der Satz bekannter Symbole eine Präambel und eine Postambel umfasst.

12. Verfahren nach Anspruch 3, das des Weiteren umfasst:

Empfangen eines Signals von dem Drahtlos-Kommunikationsmedium (8), wobei das Signal einen Strom empfangener Symbole umfasst;
Parsen der empfangenen Symbole des Eingangssignals, um Blöcke aus J-Symbolen auszubilden;
Anwenden der Permutations-Matrix auf die Blöcke der empfangenen Symbole; und separates Demodulieren gesendeter Daten aus den permutierten Blöcken empfangener Symbole.

13. Verfahren nach Anspruch 12, das des Weiteren Konjugieren der Blöcke und Anwenden einer schnellen Fourier-Transformation (FFT) auf sie umfasst.

14. Vorrichtung, die umfasst:

eine Codiereinrichtung (12), die eine Permutations-Matrix auf Blöcke von Symbolinformationen anwendet, die Informationen tragen, und eine Raum-Zeit-Block-Codierung unterzogene Matrix permutierter Blöcke von Symbolen erzeugt, wobei die Permutations-Matrix eine umgekehrte zyklische Verschiebung auf die Symbole anwendet;
eine Vielzahl von Impulsformungseinheiten (13), die eine Vielzahl von Sendesymbolen aus den Symbolen der Raum-Zeit-Block-Codierung unterzogenen Matrix erzeugen; und
eine Vielzahl von Antennen (14) zum Übertragen der Sendesignale über ein Drahtlos-Kommunikationsmedium (8),
**dadurch gekennzeichnet, dass**
die Codiereinrichtung so eingerichtet ist, dass sie die Permutations-Matrix aus einer Vielzahl von Permutations-Matrizen als eine Funktion eines Symbol-Indexes auswählt und die ausgewählte Permutations-Matrix anwendet, um eine umgekehrte zyklische Verschiebung als eine Funktion des Symbol-Index durchzuführen.

**15.** Vorrichtung nach Anspruch 14, wobei die Codiereinrichtung (12) so eingerichtet ist, dass sie $N_s$ aufeinanderfolgende Blöcke in einem Puffer sammelt, eine Permutations-Matrix auf die $N_s$ Blöcke anwendet und eine Raum-Zeit-Block-Codierung unterzogene Matrix mit $N_t$ Reihen von Symbolen ausbildet.

**16.** Vorrichtung nach Anspruch 14, die des Weiteren eine Vorcodiereinrichtung (11) umfasst, die die Symbole vorcodiert, um Blöcke mit J Symbolen auszubilden, wobei jede Reihe der Raum-Zeit-Block-Codierung unterzogene Matrix $N_D$*J Symbole enthält, wobei $N_D$ eine Anzahl von Block-Sende-Zeitintervallen zum Senden der Raum-Zeit-Matrix darstellt.

**17.** Vorrichtung nach Anspruch 16, wobei die Vorcodiereinrichtung so eingerichtet ist, dass sie einen Satz bekannter Symbole zu jeder Gruppe von K Symbolen hinzufügt.

**18.** Vorrichtung nach Anspruch 17, wobei der Satz bekannter Symbole eine Präambel und eine Postambel umfasst.

**19.** Vorrichtung nach Anspruch 17, wobei J > K.

**20.** Vorrichtung nach Anspruch 17, wobei J = K.

**21.** Vorrichtung nach Anspruch 15, wobei $N_t$=2 und die Codiereinrichtung so eingerichtet ist, dass sie die Permutations-Matrix anwendet, um die Raum-Zeit-Block-Codierung unterzogene Matrix entsprechend der folgenden Gleichung zu erzeugen:

$$\begin{bmatrix} s(2i) & -Ps^*(2i+1) \\ s(2i+1) & Ps^*(2i) \end{bmatrix}$$

wobei P eine Permutations-Matrix darstellt, i einen Index in die Blöcke von Symbolen darstellt und s einen Symbol-Block darstellt.

**22.** Vorrichtung nach Anspruch 21, wobei die Permutations-Matrix aus einem Satz von Permutations-Matrizen $\left\{ P_J^{(n)} \right\}_{n=0}^{J=1}$ gezogen wird.

**23.** Vorrichtung nach einem der Ansprüche 14 bis 22, wobei die Vorrichtung eine Basisstation innerhalb eines Drahtlos-Kommunikationssystems (2) umfasst.

**24.** Vorrichtung nach einem der Ansprüche 14 bis 22, wobei die Vorrichtung ein Mobiltelefon, einen PDA, einen Laptop-Computer, einen Desktop-Computer oder eine Zweiwege-Kommunikationseinrichtung umfasst.

**25.** Vorrichtung nach einem der Ansprüche 14 bis 24, wobei die Vorrichtung so eingerichtet ist, dass sie ein zyklisches Präfix als eine Länge auswählt, die als eine Funktion einer Kanalordnung des Drahtlos-Kommunikationsmediums ausgewählt wird, und so eingerichtet ist, dass sie das zyklische Präfix für jeden der Blöcke vor Erzeugen der Sendesignale einfügt.

**Revendications**

**1.** Procédé comprenant les étapes consistant à :

appliquer une matrice de permutation à des blocs de symboles d'un flux de données sortant et générer une matrice codée de blocs spatio-temporels de blocs permutés de symboles, où la matrice de permutation applique un décalage cyclique inverse aux symboles ;

EP 1 393 486 B1

générer des signaux de transmission à partir des blocs de symboles permutés ; et
communiquer les signaux de transmission par l'intermédiaire d'un support de communication sans fil (8), **caractérisé en ce que** :

la matrice de permutation est sélectionnée parmi une pluralité de matrices de permutation comme une fonction d'un indice de symbole du flux de données sortant, où la matrice de permutation sélectionnée applique le décalage cyclique inverse comme une fonction de l'indice de symbole.

2. Procédé selon la revendication 1, comprenant en outre de générer une matrice codée de blocs spatio-temporels ayant $N_t$ rangées, où $N_t$ représente un certain nombre d'émetteurs au sein d'un dispositif de transmission.

3. Procédé selon la revendication 2, comprenant en outre les étapes consistant à :

hacher le flux de données sortant de symboles porteurs d'informations afin de former des blocs de K symboles ;
précoder les symboles afin de former des blocs ayant J symboles ;
collecter $N_s$ blocs consécutifs ; et
générer la matrice codée de blocs spatio-temporels pour avoir $N_t$ rangées et $N_D*J$ symboles par rangée, où $N_D$ représente un certain nombre d'intervalles de temps de transmission pour communiquer les signaux de transmission.

4. Procédé selon la revendication 3, comprenant en outre d'insérer un préfixe cyclique pour chacun des blocs avant de générer les signaux de transmission, où le préfixe cyclique a une longueur sélectionnée comme une fonction d'un ordre de canal du support de communication sans fil (8).

5. Procédé selon la revendication 3, dans lequel J > K.

6. Procédé selon la revendication 3, dans lequel J = K.

7. Procédé selon la revendication 3, dans lequel $N_T$ = 2 et $N_D$ = 2, et où l'application de la matrice de permutation comprend d'appliquer la matrice de permutation afin de générer la matrice codée de blocs spatio-temporels selon l'équation suivante :

$$\begin{bmatrix} s(2i) & -Ps*(2i+1) \\ s(2i+1) & Ps*(2i) \end{bmatrix}$$

où P représente une matrice de permutation, i représente un indice dans les blocs de symboles, et s représente un bloc de symboles.

8. Procédé selon la revendication 7, dans lequel la matrice de permutation est tirée d'un jeu de matrices de permutation $\left\{ P_J^{(n)} \right\}_{n=0}^{J=1}$.

9. Procédé selon la revendication 7, dans lequel chaque rangée d'une seconde colonne de la matrice codée de blocs spatio-temporels stocke un bloc qui est une version conjuguée et permutée d'un bloc correspondant d'une autre rangée d'une première colonne.

10. Procédé selon la revendication 3, dans lequel le précodage des symboles comprend d'ajouter un jeu de symboles connus à chaque groupe de K symboles.

11. Procédé selon la revendication 10, dans lequel le jeu de symboles connus comprend un préambule et un postambule.

12. Procédé selon la revendication 3, comprenant en outre les étapes consistant à :

recevoir un signal du support de communication sans fil (8), où le signal comprend un flux de symboles reçus ;

hacher les symboles reçus du signal d'entrée afin de former des blocs de J symboles ;

appliquer la matrice de permutation aux blocs de symboles reçus ; et

démoduler séparément les données transmises depuis les blocs permutés de symboles reçus.

13. Procédé selon la revendication 12, comprenant en outre de conjuguer et d'appliquer une transformée de Fourier rapide (FFT) aux blocs.

14. Appareil comprenant :

   un codeur (12) pour appliquer une matrice de permutation à des blocs de symboles porteurs d'informations et pour générer une matrice codée de blocs spatio-temporels de blocs de symboles permutés, où la matrice de permutation applique un décalage cyclique inverse aux symboles ;

   une pluralité d'unités de mise en forme d'impulsion (13) pour générer une pluralité de signaux de transmission à partir des symboles de la matrice codée de blocs spatio-temporels ; et

   une pluralité d'antennes (14) pour communiquer les signaux de transmission par l'intermédiaire d'un support de communication sans fil (8),

   **caractérisé en ce que**

   le codeur est adapté pour sélectionner la matrice de permutation à partir d'une pluralité de matrices de permutation comme fonction d'un indice de symbole, et pour appliquer la matrice de permutation afin de procéder à un décalage cyclique inverse comme fonction de l'indice de symbole.

15. Appareil selon la revendication 14, dans lequel le codeur (12) est adapté pour collecter $N_s$ blocs consécutifs dans un tampon, pour appliquer une matrice de permutation aux $N_s$ blocs, et pour former une matrice codée de blocs spatio-temporels ayant $N_t$ rangées de symboles.

16. Appareil selon la revendication 14, comprenant en outre un précodeur (11) pour précoder les symboles afin de former des blocs ayant J symboles, où chaque rangée de la matrice codée de blocs spatio-temporels contient $N_D$*J symboles, où $N_D$ représente un certain nombre d'intervalles de temps de transmission de bloc pour transmettre la matrice spatio-temporelle.

17. Appareil selon la revendication 16, dans lequel le précodeur est adapté pour ajouter un jeu de symboles connus à chaque groupe de K symboles.

18. Appareil selon la revendication 17, dans lequel le jeu de symboles connus comprend un préambule et un postambule.

19. Appareil selon la revendication 17, dans lequel J > K.

20. Appareil selon la revendication 17, dans lequel J = K.

21. Appareil selon la revendication 15, dans lequel $N_t$ = 2 et le codeur est adapté pour appliquer la matrice de permutation afin de générer la matrice codée de blocs spatio-temporels selon l'équation suivante:

$$\begin{bmatrix} s(2i) & -Ps*(2i+1) \\ s(2i+1) & Ps*(2i) \end{bmatrix}$$

où P représente une matrice de permutation, i représente un indice dans les blocs de symboles, et s représente un bloc de symboles.

22. Appareil selon la revendication 21, dans lequel la matrice de permutation est tirée d'un jeu de matrices de permutation $\left\{ P_J^{(n)} \right\}_{n=0}^{J=1}$ .

23. Appareil selon l'une quelconque des revendications 14 à 22, dans lequel l'appareil comprend une station de base au sein d'un système de communication sans fil (2).

24. Appareil selon l'une quelconque des revendications 14 à 22, dans lequel l'appareil comprend un dispositif parmi un téléphone cellulaire, un assistant numérique personnel, un ordinateur portable, un ordinateur de bureau, un dispositif de communication bidirectionnelle.

25. Appareil selon l'une quelconque des revendications 14 à 24, dans lequel l'appareil est adapté pour sélectionner un préfixe cyclique comme une longueur sélectionnée comme fonction d'un ordre de canal du support de communication sans fil, et est adapté pour insérer le préfixe cyclique pour chacun des blocs avant de générer les signaux de transmission.

**FIG. 1**

EP 1 393 486 B1

**FIG. 2**

**FIG. 3**

**FIG. 4**

**FIG. 5**

**FIG. 6**

**FIG. 7**

**FIG. 8**

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Z. LIU ; G.B. GIANNAKIS.** Space-time coding for broadband wireless communication. *Wireless Sysetms and Mobile Computing,* January 2001, vol. 1 (1), 33-53
- **LINDSKOG et al.** A transmit diversity scheme for channels with intersymbol interference. *Proceedings of ICC,* June 2000, vol. 1, 307-311
- **F.W. VOOK et al.** Transmit diversity schemes for broadband mobile communication systems. *Processions on IEEE Vehicular Technology Conference,* 2000, vol. 6, 2523-2529
- **Z. LIU ; G. B. GIANNAKIS.** Space-time coding with transmit antennas for multiple access regardless of frequency-selective multi-path. *Proc. of Sensor Array and Multichannel Signal Processing Workshop,* March 2000, 178-182
- **Y.LI ; J.C.CHUNG ; N.R.SOLLENBERGER.** Transmitter diversity for OFDM systems and its impact on high-rate data wireless networks. *IEEE Journal on Selected Areas in Communications,* July 1999, vol. 17 (7), 1233-1243